# EUROPEAN PATENT SPECIFICATION

(11) **EP 4 264 975 B1**
(45) Date of publication and mention of the grant of the patent: **04.02.2026**
(21) Application number: 20842216.2
(22) Date of filing: 18.12.2020
(51) Int. Cl.: H04W 4/70, H04W 4/90

(54) **TECHNIQUE FOR CONTROLLING OPENING AND CLOSING OF A PROTECTIVE MASK**
TECHNIK ZUR STEUERUNG DES ÖFFNENS UND SCHLIESSENS EINER SCHUTZMASKE
TECHNIQUE DE COMMANDE D'OUVERTURE ET DE FERMETURE D'UN MASQUE DE PROTECTION

(43) Date of publication of application: 25.10.2023
(73) Proprietor: Ericsson AB, 164 80 Stockholm (SE); Telefonaktiebolaget LM Ericsson (publ), 164 83 Stockholm (SE)
(72) Inventor: SCHOLZ, Heike, 64297 Darmstadt (DE); NIEMÖLLER, Jörg, 19149 Sollentuna (SE); MILICIC, Milka, 63263 Neu Isenburg (DE); MILIC, Milan, 60598 Frankfurt (DE)
(74) Representative: Ericsson
(86) International application number: PCT/EP2020/087331
(87) International publication number: WO 2022/128136

(56) References cited:
- CN-U- 211 486 285
- KR-A- 20190 124 888

## Description

### Technical Field

The present disclosure relates to a technique for controlling an actuator of a protective mask. More specifically, and without limitation, methods and devices are provided for controlling an actuator of a protective mask to assume selectively a closed state for respiratory protection and an open state as well as methods and devices for assuming such states.

### Background

Conventional protective masks, such as "facial masks" or "community masks", are a simple piece of cloth or more complex filtering material which has to be put on the face of a user manually, for example by means of elastic strings, so as to cover at least mouth and nose of the user.

The document US 8,336,114 B1 describes a further conventional protective mask that comprises a head mount which is manually adjustable to the head size of the user. The head mount pivotably supports a transparent screen, which can be displaced by manual rotating around a horizontal axis with anchor points at each side of the head. In a closed state, the screen is positioned vertically in front of the face of the user. In an open state, the screen is positioned horizontally above the head of the user.

Face masks have evolved into wearable technology. For example, D. Rangel et al. describe in the scientific article "Implementing air flow sensor in a medical mask for breathing detection", Health Technol. 10, 405-410 (2020), implementations of air flow sensors in a face mask to detect low breathing by measuring a breathing frequency of the user wearing the mask. The mask has to be put on and removed manually.

The user of such conventional masks has to use his or her hands which must be disinfected beforehand to put the mask temporarily on and off. Moreover, the user sometimes forgets to put on the protective mask, when entering an area wherein wearing a mask is mandatory, and sometimes the user might not have enough time to disinfect his or her hands before putting the protective mask on his or her face, e.g. in case of an emergency, and/or the user might not be able to use his or her hands, e.g., due to carrying a weight such as a patient on a stretcher. Furthermore, the mask can be contaminated or damaged while the user is not wearing the mask on the face. For example, some users have become accustomed to wearing the protective mask on the arm where masks are not mandatory.

The online article "This high-tech face mask opens and closes with the touch of a button" by Ronny Koenig, published on 20 May 2020 on the webpage today.com, includes a video of a mask arrangement designed by Asaf Gitelis. The mask arrangement comprises a button connected by a Bowden cable to a modified surgical face mask in order to open and close the mask along a horizontal slit for eating and drinking without removing the mask manually from the nose and mouth. However, using such mask arrangement permanently occupies one hand for the button. Furthermore, the mechanical connection between face mask and button increases the weight of the bulky mask arrangement and drastically impacts the mobility of the user.

The online article "This Robotic Face Mask Can Automatically Open and Close If There Are People Around" by Tyler Lee, published on 21 May 2020 on the webpage ubergizmo.com, refers to a video published on the online video-sharing platform "YouTube" under the name of "DesignMaker". The mask comprises motion sensors to detect motion relative to the mask, and to open and close a flap at the front of the mask depending on the detection. As a consequence, any motion of the mask triggers the flap to close, and in the absence of motion, the mask always triggers the flap to open.

Document KR 2019 0124888 A describes a smart mask system. In order to further increase the use time of the battery power source, a dust sensor is provided. In order to suck air into the face glass of the smart mask according to the detected air quality by the dust sensor, an air control valve and air for driving the air control valve for controlling whether to suck the outside air through the air passage provided with the filter or the outside air into the air passage without the filter installed. It is further described to use a one-way EMP solenoid valve. According to the concentration of dust in the atmosphere detected by the dust sensor, an external inlet air through the filter unit with the blower on to control the suction or to stop the external inlet air with blower off to operate immediately.

Document CN 211 486 285 U describes a gas-proof mask including a control module, a filter module, a breathing module, an alarm module, and a detection module. After the user wears the mask body, the filter module is turned on. When the detection module detects that the concentration of carbon dioxide and the concentration of poisonous gas inside the mask body exceed a set threshold, the alarm module is turned on and issues an alarm, close the filter module, open the breathing module, and the user can breathe independently.

### Summary

Accordingly, there is a need for a technique that prevents contamination or damage of a protective mask when a user would temporarily remove the protective mask. An alternative or further objective is to prevent that the user forgets to put the protective mask on when respiratory protection is required.

The invention is defined by the independent claims.

Preferred embodiments are defined in the dependent claims.

### Brief Description of the Drawings

Further details of embodiments of the technique are described with reference to the enclosed drawings, wherein:
- Fig. 1: shows a schematic block diagram of an embodiment of a control equipment for controlling an actuator of a protective mask configured to assume selectively a closed state for respiratory protection and an open state, in which the respiratory flow resistance is reduced compared to the closed state;
- Fig. 2: shows a schematic block diagram of an embodiment of a protective mask comprising an actuator for assuming selectively a closed state for respiratory protection and an open state, in which the respiratory flow resistance is reduced compared to the closed state;
- Fig. 3: shows a flowchart for an embodiment of a method of controlling an actuator of a protective mask configured to assume selectively a closed state for respiratory protection and an open state, in which the respiratory flow resistance is reduced compared to the closed state, which method may be implementable by the control equipment of Fig. 1;
- Fig. 4: shows a flowchart for an embodiment of a method of assuming selectively a closed state for respiratory protection and an open state, in which the respiratory flow resistance is reduced compared to the closed state, which method may be implementable by the protective mask of Fig. 2;
- Fig. 5: shows a schematic block diagram of a system comprising embodiments of the control equipment and protective mask of Figs. 1 and 2, respectively, for controlling and assuming selectively the closed state and the open state, respectively;
- Fig. 6: schematically illustrates examples of at least one information signal indicative of an environment of the protective mask, which may be received at an embodiment of the control equipment of Fig. 1 and/or obtained and forwarded at an embodiment of the protective mask of Fig. 2;
- Fig. 7: schematically illustrates examples of at least one information signal indicative of an environment of the protective mask, depending on which a control signal for opening or closing the protective mask may be sent from a control equipment of Fig. 1 to the protective mask of Fig. 2, the at least one information signal may comprise at least one information signal of Fig. 6;
- Figs. 8 to 11: show example flow charts of controlling the actuator of the protective mask, each in dependence of one type of information signal, which are combinable into a decision tree comprising various types of information signals;
- Figs. 12A and 12B: show a first embodiment of a protective mask comprising an actuator for assuming selectively a closed state for respiratory protection and an open state, in which the respiratory flow resistance is reduced compared to the closed state, respectively;
- Figs. 13A and 13B: show a second embodiment of a protective mask comprising an actuator for assuming selectively a closed state for respiratory protection and an open state, in which the respiratory flow resistance is reduced compared to the closed state, respectively;
- Figs. 14A and 14B: show a third embodiment of a protective mask comprising an actuator for assuming selectively a closed state for respiratory protection and an open state, in which the respiratory flow resistance is reduced compared to the closed state, respectively;
- Fig. 15: shows a schematic block diagram of an embodiment of a control equipment embodying the control equipment of Fig. 1;
- Fig. 16: shows a schematic block diagram of an embodiment of a protective mask embodying the protective mask of Fig. 2;
- Fig. 17: schematically illustrates an embodiment of a telecommunications network connected via an intermediate network to a host computer for providing at least one information signal;
- Fig. 18: shows a generalized block diagram of an embodiment of a host computer communicating via an embodiment of a base station or radio device functioning as a gateway with an embodiment of a user equipment over a partially wireless connection, wherein the user equipment may embody the control equipment of Fig. 1; and
- Figs. 19 and 20: show flowcharts for embodiments of methods implemented in a communication system including embodiments of a host computer, a base station or radio device functioning as a gateway and a user equipment.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a New Radio (NR) or 5G implementation, it is readily apparent that the technique described herein may also be implemented for any other radio communication technique, including 3GPP LTE (e.g., LTE-Advanced or a related radio access technique such as MulteFire), in a Wireless Local Area Network (WLAN) according to the standard family IEEE 802.11, for Bluetooth according to the Bluetooth Special Interest Group (SIG), particularly Bluetooth Low Energy, Bluetooth Mesh Networking and Bluetooth broadcasting, for Z-Wave according to the Z-Wave Alliance or for ZigBee based on IEEE 802.15.4.

Moreover, those skilled in the art will appreciate that the functions, steps, units and modules explained herein may be implemented using software functioning in conjunction with a microcontroller, programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising at least one computer processor and memory coupled to the at least one processor, wherein the memory is encoded with one or more programs that may perform the functions and steps or implement the units and modules disclosed herein.

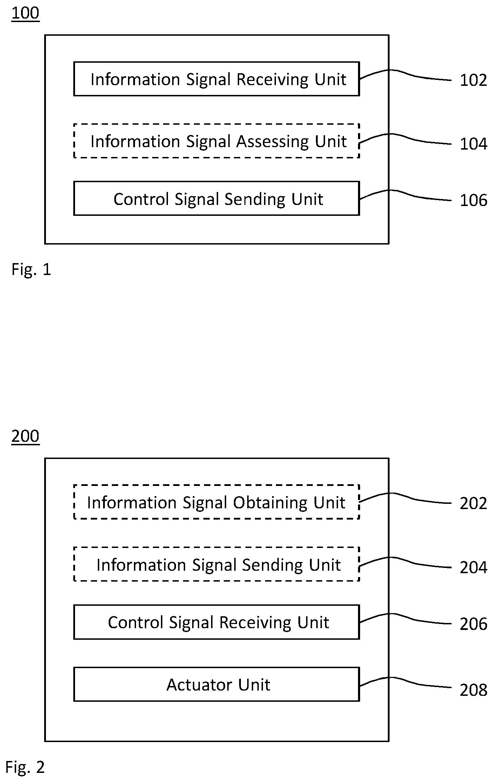

Fig. 1 schematically illustrates a block diagram of an embodiment of a control equipment for controlling an actuator of a protective mask configured to assume selectively a closed state for respiratory protection and an open state, in which the respiratory flow resistance is reduced compared to the closed state. The control equipment is generically referred to by reference sign 100.

The control equipment 100 comprises an information signal receiving unit 102 that is configured to receive at least one information signal indicative of an environment of the protective mask.

The control equipment 100 further comprises a control signal sending unit 106 that is configured to send a control signal to the actuator of the protective mask for assuming selectively the closed state and the open state depending on the at least one information signal.

Controlling the actuator of the protective mask to assume selectively the closed state and the open state depending on the received at least one information signal, which is indicative of the environment of the protective mask, can prevent that a user forgets to put the protective mask on, e.g., when respiratory protection is required in the environment, at least in some embodiments.

Same or further embodiments can prevent that the protective mask is contaminated or damaged while a user puts the protective mask off, because the open state is assumed by means of the actuator responsive to the at least one information signal indicative of the environment of the mask.

Same or still further embodiments can increase the time of use (i.e., the lifetime or mask-wearing time) of the protective mask, e.g., by assuming the closed state only when needed according to the at least one information signal, e.g., by minimizing the collective time of filtering air through the protective mask during the mask-wearing time.

Optionally, the control equipment 100 comprises an information signal assessing unit 104 that is configured to assess the received at least one information signal in relation to a local requirement for the respiratory protection.

Any of the units of the receiving control equipment 100 may be implemented by modules configured to provide the corresponding functionality.

The control equipment 100 may also be referred to as, or may be embodied by, a user equipment (UE). The control equipment 100 and the actuator of the protective mask are in (e.g., radio or wired) communication at least for the sending of the control signal at the control equipment 100.

Fig. 2 schematically illustrates a block diagram of an embodiment of a protective mask comprising an actuator for assuming selectively a closed state for respiratory protection and an open state, in which the respiratory flow resistance is reduced compared to the closed state. The protective mask is generically referred to by reference sign 200.

The protective mask 200 comprises a control signal receiving unit 206 that is configured to receive, at the actuator of the protective mask, a control signal for assuming selectively the closed state and the open state.

The protective mask 200 further comprises an actuator unit 208 configured to assume, by means of the actuator, selectively the closed state and the open state of the protective mask depending on the received control signal.

Optionally, the protective mask 200 comprises an information signal obtaining unit 202 configured to obtain, at the protective mask, at least one information signal indicative of an environment of the protective mask.

Further optionally, the protective mask 200 comprises an information signal sending unit 204 configured to send, from the protective mask to a control equipment 100, the at least one information signal indicative of the environment of the protective mask. The control signal may be received from the control equipment, e.g., in response to sending the at least one information signal.

Any of the units of the protective mask 200 may be implemented by modules configured to provide the corresponding functionality.

The protective mask 200 and the control equipment 100 may be in (e.g., radio or wired) communication at least for the reception of the control signal at the protective mask 200.

The control signal and/or the at least one information signal may comprise any feature disclosed in the context of the control equipment 100.

The closed state may provide respiratory protection. The open state may be a substitute for or equivalent to talking off the mask.

The actuator of a protective mask may be controlled without manual input for assuming selectively the closed state and the open state. Alternatively or in addition, the actuator of a protective mask may be controlled taking into account one or more pieces of environment information indicated by the at least one information signal for assuming selectively the closed state and the open state.

The assessing may comprise tracking objects (e.g., persons and/or radio devices) in the environment. Alternatively or in addition, the assessing may comprise maintaining an object list of objects in the environment. The control signal may be sent to the actuator responsive to a change in the object list, e.g., in contrast to conventional sensors on masks that trigger an actuator responsive to any motion relative to the mask.

The at least one information signal may relate to the environment. In contrast to conventional protective masks that do not have access (e.g., via radio signaling) to information as to the environment of the protective mask, embodiments can control the protective mask to open and/or close the protective mask by means of the actuator without manual intervention, based on conditions from surrounding environment.

The at least one information signal may comprise a radio signal (e.g., received using antennas at or near the protective mask) and/or a camera signal (e.g., obtained using a camera or infrared sensors at or near the protective mask).

The radio signal may be indicative of terrestrial coordinates (e.g., GPS coordinates) of the protective mask and/or an object (e.g., a person or a radio device or a premise) in the environment of the protective mask. Alternatively or in addition, the radio signal may comprise an identifier of an object, e.g., a Service Set Identifier (SSID) or cell identifier (CID) of a base station or a discovery signal of a radio device.

Alternatively or in addition, the control signal may comprise a radio signal, e.g., of a peer-to-peer or sidelink communication.

A radio channel used for the at least one information signal (e.g., the channel between the at least one object in the environment and the control equipment or the protective mask) and/or a radio channel used for the control signal (e.g., the channel between the control equipment and the protective mask) may comprise multiple subchannels or subcarriers (as a frequency domain). Alternatively, or in addition, the channel may comprise one or more slots for a plurality of modulation symbols (as a time domain). Alternatively, or in addition, the channel may comprise a directional transmission (also: beamformed transmission), a directional reception (also: beamformed reception) or a multiple-input multiple-output (MIMO) channel with two or more spatial streams (as a spatial domain).

Any signaling may be based on one or more known technologies comprising, e.g. Bluetooth, Wi-Fi, infrared sensors, camera, and/or mobile networks.

The device 100 may be embodied by a UE (also: "mobile equipment").

The control equipment 100 and the protective mask 200 may be in (e.g., radio or wired) signal exchange for (e.g., electronically) controlling the actuator (e.g., a mechanism of the protective mask 200) to assume selectively the open state and the closed state of the protective mask 200.

The at least one information signal indicative of an environment of the protective mask may comprise (e.g., wirelessly and/or radio received) data, e.g. GPS coordinates, camera pictures, sensor data, and/or Service Set Identifiers (SSIDs).

By the combination of embodiments of the control equipment 100 and protective mask 200, methods for opening and closing the protective mask 200 without the need for manual input can be provided. The methods may be based on an interaction between the actuator of the protective mask 200, the control equipment 100 performing a step of assessing (e.g., a decision algorithm), and the one or more information signals (also referred to as "data") of the environment.

The at least one information signal may be provided by, e.g., mobile networks (i.e., radio networks) and/or sensors built into the protective mask 200 or the (e.g., mobile) control equipment 100, e.g. a UE and/or a smartphone.

For example, a UE embodying the control equipment 100 may comprise an application (e.g., an application of a UE) implementing the first method aspect. Alternatively or in addition, the control equipment 100 may be integrated into the protective mask 200. By way of example, the control signal sending unit 106 of the control equipment 100 and the control signal receiving unit 206 of the protective mask 200 may be (e.g., internal) interfaces within the protective mask 200.

Further alternatively or in addition, the control equipment 100 may be comprised in a smart watch (e.g., as an example of the UE). In any embodiment, the control equipment 100 may be responsible for controlling (e.g., feedback-controlling or regulating) the opening and closing mechanism of the protective mask 200.

The at least one information signal may comprise partial information or any information needed to make a decision whether the protective mask 200 is to be or needs to be opened or closed in the assessing step. The at least one information signal may be collected from local sensors, central network servers, and/or a local network environment. Alternatively or in addition, user profile information (e.g., comprising a whitelist of UEs belonging to family members and/or close friends and/or colleagues who are to be excluded from a requirement of closing the protective mask, and/or comprising a predetermined, e.g. by the user, minimal distance and/or a predetermined, e.g., by the user, maximal number and/or density of one or more persons) may be taken into account when assessing the partial information and/or information signals.

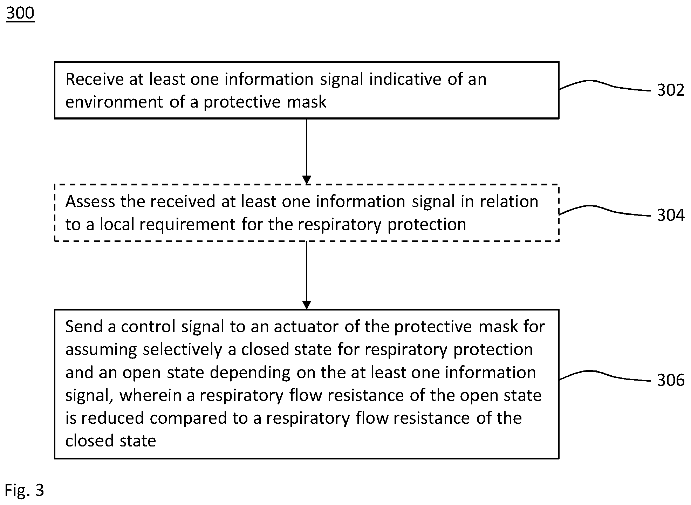

Fig. 3 shows an example flowchart for a method 300 of controlling an actuator of a protective mask configured to assume selectively a closed state for respiratory protection and an open state, in which the respiratory flow resistance is reduced compared to the closed state. The method 300 comprises or initiates a step 302 of receiving at least one information signal indicative of an environment of the protective mask. The method 300 further comprises or initiates a step 306 of sending a control signal to the actuator of the protective mask for assuming selectively the closed state and the open state depending on the at least one information signal.

Optionally, the method 300 further comprises or initiates a step 304 of assessing the received at least one information signal in relation to a local requirement for the respiratory protection (e.g., for wearing a protective mask). The sent 306 control signal may control (e.g., trigger) the actuator to assume selectively the open state and the closed state depending on the result of the assessing 304.

The method 300 may be performed by the control equipment 100, e.g., embodying a control equipment. For example, the units 102, 104, and 106 may perform the steps 302, 304, and 306, respectively.

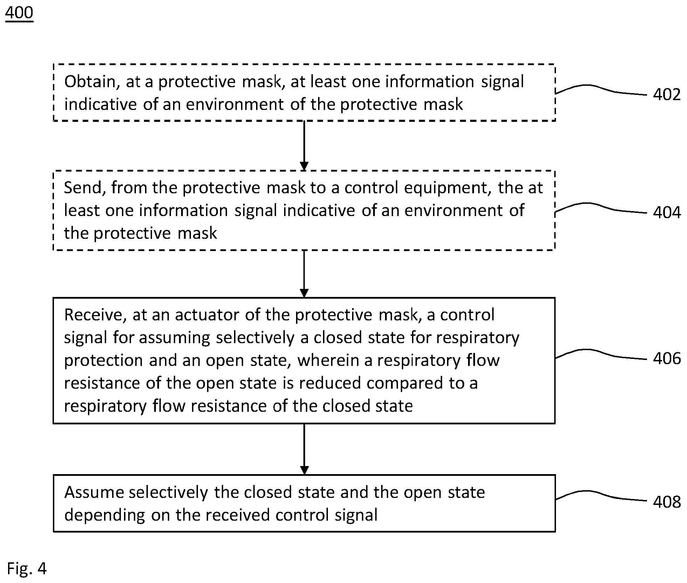

Fig. 4 shows an example flowchart for a method 400 performed by a protective mask comprising an actuator for assuming selectively a closed state for respiratory protection and an open state, in which the respiratory flow resistance is reduced compared to the closed state. The method 400 comprises or initiates a step 406 of receiving, at the actuator of the protective mask, a control signal for assuming selectively the closed state and the open state. The method 400 further comprises or initiates a step 408 of assuming, by means of the actuator, selectively the closed state and the open state of the protective mask depending on the received control signal.

Optionally, the method 400 further comprises or initiates a step 402 of obtaining, at the protective mask, at least one information signal indicative of an environment of the protective mask.

Further optionally, the method 400 further comprises or initiates a step 404 of sending, from the protective mask to a control equipment, the at least one information signal indicative of an environment of the protective mask, wherein the control signal is received from the control equipment.

The method 400 may be performed by the protective mask 200, e.g., embodying the protective mask. For example, the units 202, 204, 206, and 208 may perform the steps 402, 404, 406, and 408, respectively.

The protective mask 200, e.g., in the closed state, may also be denoted as or may function as a respirator mask, a filter mask, a facial mask or a community mask. The protective mask 200 may comprise a filtering section configured to filter air inhaled and/or exhaled through at least one of the mouth and the nose of a human user (briefly: user). The filtering section may cover at least one of the mouth and the nose of the human user in the closed state, or at least in the closed state. The filtering section may be a central section of the protective mask. The filtering section may comprise a fabric. The fabric may comprise one or more filtering layers. The fabric may comprise any type of (e.g., woven and/or knitted) cloth.

Herein, the respiratory protection may be based on the protective mask, e.g., the filtering section, being configured to retain or filter-out liquid droplets and/or aerosols in the air in the closed state. The respiratory protection may correspond to a standard for filtering face piece 2 (FFP2), filtering face piece 3 (FFP3), N95, KN95, or any other standard.

Alternatively or in addition, the open state may allow for lip reading (i.e., for lip read the human user wearing the protective mask 200); drinking or eating; or clear speech or pronunciation. The open state may comprise a state of unobstructed respiration, e.g. if any fabric is removed from both nose and mouth in the open state.

The protective mask 200 may comprise at least one sensor. The at least one information signal may be obtained by the at least one sensor of the protective mask 200. The at least one information may be forwarded to the control equipment. Alternatively or in addition, at least one sensor may be comprised in a control equipment, which may be spaced apart from the protective mask.

The at least one information signal may be (e.g., explicitly or implicitly) indicative of the environment being associated with a local respiratory protection requirement (briefly: "local protection requirement" or even shorter "local requirement") for the respiratory protection. A local requirement, e.g., based on the at least one information signal, to wear a protective mask may also be denoted as "positive local requirement". An absence of a local requirement, e.g., based on the at least one information signal, to wear a protective mask may also be denoted as "negative local requirement".

The sent control signal may trigger the actuator to assume the closed state responsive to the at least one information signal indicative of the environment being associated with the local requirement for the respiratory protection. Alternatively or in addition, the sent control signal may trigger the actuator to assume the open state responsive to the at least one information signal indicative of the environment

The local requirement for the respiratory protection may be a (e.g., positive) local requirement for wearing a protective mask, e.g., in an indoors area. Alternatively or in addition, the (e.g., negative) local requirement for the respiratory protection may comprise no need for wearing a protective mask, e.g., based on an outdoors area. Further alternatively or in addition, a local requirement for the respiratory protection may be specific to each one of two or more information signals. For example, a first information signal may be indicative of an outdoors area, which does not necessarily imply a need for wearing a protective mask, and a second information signal may be indicative of a crowd of persons, e.g., without the possibility of always keeping a safety distance, whereby wearing a protective mask is mandatory. The step 304 of assessing may comprise determining a positive local requirement for the respiratory protection if at least one information signal from a plurality of received information signals indicates and/or implies that wearing a protective mask is mandatory.

The step 304 of assessing may determine whether or not the received at least one information signal is indicative of and/or implies the (e.g., positive) local requirement for the respiratory protection in the environment. For example, the at least one information signal may be indicative of the (e.g., positive) local requirement for the respiratory protection.

Herein, "being indicative of the (e.g., positive) local requirement" may comprise deriving the (e.g., positive) local requirement solely from the at least information signal, e.g. a beacon frame comprising "Mask required!". Alternatively or in addition, "implying the (e.g., positive) local requirement" may comprise receiving at least one information signal of a location and/or local surrounding, which in combination with further information (e.g., a map comprising locations with a positive local requirement and/or a list of conditions on the local surrounding with a positive local requirement) lead to an indication of a (e.g., positive) local requirement for respiratory protection.

The assessing 304 of the received at least one information signal in relation to a local requirement for the respiratory protection may comprise assessing whether the closed state or the open state is to be assumed, e.g. a location on a map may be compared to stored requirements as to wearing a protective mask.

The map may be stored in the control equipment. Alternatively or in addition, the map may be accessible by the control equipment. The map may be provided by a remote location, e.g., a storage unit, and/or the map may be accessible or downloadable from a server (also referred to as cloud).

Assessing 304 the received at least one information signal may comprise running through a decision tree. The decision tree may comprise a hierarchical combination of conditions, e.g., at least one or each of which depends on the received at least one information signal. For example, if a radio signal for radio-frequency identification (RFID) is indicative of a (e.g., positive) local requirement to wear a protective mask, the decision tree may output the assessment to assume the closed state, irrespective of any further information signal indicating no requirement of wearing a protective mask, e.g., based on a number and/or density of other human users being less than a predefined threshold.

Alternatively or in addition, the step of assessing may determine whether or not the received at least one information signal is indicative of and/or implies at least one of the positive local requirement and the negative local requirement for the respiratory protection in the environment, the positive local requirement comprising a requirement for respiratory protection and the negative local requirement comprising no requirement for respiratory protection. For example, the at least one information signal may imply the (e.g., positive) local requirement for the respiratory protection in the environment based on a map that associates locations with the (e.g., positive) local requirement, wherein the at least one information signal is indicative of a location of the protective mask. Alternatively or in addition, the at least one information signal may imply the (e.g., positive) local requirement for the respiratory protection in the environment based on a density of one or more persons in the environment of the protective mask.

The result of the assessing may be indicative of whether or not the environment is associated with the (e.g., positive) local requirement. The sent control signal may trigger the actuator to assume either the closed state or the open state depending on the result of the assessing, i.e., whether or not the environment is associated with the (e.g., positive) local requirement.

The control signal sent to the actuator of the protective mask 200 may control the actuator to assume selectively the closed state and the open state (e.g., to assume either the closed state or the open state) depending on the at least one information signal.

The control signal may be received from a control equipment 100. The control equipment 100 may be spaced apart from the protective mask 200.

The control signal may be wirelessly received in the step 406. The control signal may be a radio signal.

The method 300 may be performed by the control equipment 100. The control equipment 100 may be spaced apart from the protective mask 200. E.g., the control equipment 100 may be comprised in, or embodied by, a UE (e.g., under the ownership of the user of the protective mask 200).

Optionally, the protective mask 200 may comprise the control equipment 100. Alternatively or in addition, the method 300 may be performed by the protective mask 200, e.g., by the control equipment of the protective mask.

The method 400 may be performed by the protective mask 200.

Conventional protection masks can be inconvenient, can hinder breathing, and can be uncomfortable. E.g., for wearers of glasses, the problem exists that in outdoor areas the glasses are fogging and/or obstructing the view. Embodiments of the technique can close the protective masks 200 only when really needed.

The methods 300 and 400 for opening and closing the protective mask guarantee the safety that the protective mask is always closed if necessary. For example, by the assessing (also denoted as "implemented algorithm"), the protective mask may close when the wearer is in crowded areas, in shops or in areas where wearing a mask is mandatory, e.g., pedestrian zones.

Alternatively or in addition, the control equipment 100 (which may also be referred to as a "logic") of the protective mask 200 may determine that wearing the protective mask 200 is necessary in situations of the environment of the protective mask 200. This (e.g., positive) local requirement may be not apparent to the user in these situations. Thus, a higher level of protection can be reached as compared to manually applied protective masks, while still allowing to open the protective mask 200 if possible.

There is no need to manually put on and remove the protective mask 200 from the face, as the protective mask 200 can be opened and therefore be kept on and/or close to the face.

Embodiments of the methods 300 and 400 can allow for a more hygienic use, as the protective mask 200 opens and/or closes without manual intervention, e.g., without using a hand and/or without the need to touch the protective mask 200 with a hand. The protective mask 200 implementing the method 400 can be comfortable to use and/or wear, as the protective mask 200 closes and opens also if the hands of the user (i.e. the wearer) are occupied. For example while working, the wearer does not have to touch the protective mask 200. Alternatively or in addition, the wearer does not need to put the protective mask 200 on and/or off. This can be in contrast to conventional masks with an opening and closing mechanism that can be triggered only manually, e.g., by pressing a button connected by cable or wire to the mask for drinking or eating.

By receiving the at least one information signals from objects in the environment, the control equipment may update a list of objects in the environment for the assessing 304. This can be in contrast to conventional masks comprising motion sensors which upon detecting any motion relative to the mask trigger the closing of the mask, independently of any local respiratory protection requirement (e.g., when being alone in a non-public indoors place or an unpopulated outdoors area) solely due to the motion of the mask.

For the convenience of the user, the actuator of the protective mask 200 is triggered by means of the control signal, e.g. remotely, using the control equipment 100.

Alternatively or in addition, embodiments of the protective mask 200 can be able to relate different conditions and/or parameters concerning the local environment of the protective mask 200 using the control equipment 100 in the assessing step 304.

The protective mask 200 may bidirectionally communicate with the control equipment 100, i.e. by receiving and/or sending data (comprising, e.g., one or more information signals and/or a control signal for opening and/or closing) from or to the control equipment 100.

In any aspect, the at least one information signal may be indicative of the environment being associated with a local requirement for the respiratory protection. The control signal (sent to the actuator of the protective mask 200 in the step 306 and/or received at the protective mask 200 in the step 406) may control (e.g., trigger) the actuator to assume the closed state and/or the open state responsive to the at least one information signal.

For example, the control signal may comprise a beacon frame indicating a requirement for respiratory protection.

The assessing 304 may determine whether or not the received at least one information signal is indicative of and/or implies the local requirement, e.g. at least one of a positive local requirement and a negative local requirement, for the respiratory protection in the environment, the positive local requirement comprising a requirement for respiratory protection and the negative local requirement comprising no requirement for respiratory protection. The control signal (e.g., sent in the step 306 and/or received in the step 406) may control (e.g., trigger) the actuator to assume the open state if the at least one information signal is not indicative of and/or does not imply the (e.g., positive) local requirement according to the result of the assessing 304, and/or if the at least one information signal is indicative of and/or implies the negative local requirement. Alternatively or in addition, the control signal (e.g., sent in the step 306 and/or received in the step 406) may control (e.g., trigger) the actuator to assume the closed state if the at least one information signal is indicative of and/or implies the (e.g., positive) local requirement.

In any aspect, the at least one information signal may be indicative of a location of the protective mask and/or a type of location of the protective mask.

The type of the location (e.g., the type of the environment) may comprise at least one of a (e.g., densely) built-up area, (e.g., a shopping zone or pedestrian zone); a countryside; and unbuilt plots (e.g., natural landscape or wasteland). Alternatively or in addition, the at least one information signal may be indicative of geographic information (GI) or geographic data and information (GDI), e.g. according to the ISO/TC 211 series of standards.

The step 304 of assessing may determine whether or not the at least one information signal (e.g., received in the step 302, obtained in the step 402, and/or sent in the step 404) implies the (e.g., positive) local requirement for the respiratory protection in the environment using a map that associates the location of the protective mask 200 and/or the type of location of the protective mask with the (e.g., positive) local requirement.

In any aspect, the at least one information signal may be indicative of one or more persons and/or of one or more (e.g., portable) radio devices in the environment of the protective mask 200. The portable radio devices may comprise one or more wearable radio devices.

The assessing 304 may determine whether or not the received at least one information signal implies the (e.g., positive) local requirement for the respiratory protection in the environment based on a number and/or a density of the one or more persons and/or of the one or more portable radio devices in the environment of the protective mask.

In any aspect, the at least one information signal may be indicative of whether the protective mask 200 is located indoors or outdoors.

The control signal may control to the actuator of the protective mask 200 to assume selectively the closed state and the open state (e.g., to assume either the closed state or the open state) depending on whether the protective mask 200 is located indoors or outdoors, respectively. The absence or presence of a satellite signal (e.g., a signal from a navigation satellite system) may be indicative of whether the protective is located indoors or outdoors, respectively.

The assessing 304 may determine that the at least one information signal implies the positive local requirement for the respiratory protection if the at least one information signal is indicative of the protective mask 200 being located indoors. Alternatively or in addition, the assessing 304 may determine that the at least one information signal does not imply the positive local requirement for the respiratory protection and/or implies the negative local requirement if the at least one information signal is indicative of the protective mask being located outdoors.

The assessing 304 may comprises comparing the received 302 at least one information signal with a stored list of locations and/or a stored list of radio devices. Herein, any radio device may be a UE. Optionally, the radio devices may comprise portable radio devices.

The list may be stored at the control equipment 100 performing the method 300.

The stored list may comprise an excluded list of radio devices, the radio signals of which are to be excluded from the assessing 304 of the received 302 at least one information signal in relation to the local requirement for the respiratory protection.

The list of stored UEs may be referred to as a whitelist. The whitelist may, e.g., comprise a list of UEs under the ownership of a predefined group of contact persons, in particular family members and/or members of the same household.

The stored list may comprise at least one predefined threshold for taking the received 302 at least one information signal into account in the assessing 304. The at least one predefined threshold may correspond to and/or may comprise a minimum distance of a portable radio device, a maximum number of portable radio devices, and/or a maximum density of portable radio devices in the environment of the protective mask.

The predefined threshold may comprise a minimal distance from another user (e.g., between 1.5 meters and 2 meters), below which the closed state is to be selectively assumed. Alternatively or in addition, the predefined threshold may comprise a maximal number of other users, e.g., within a predefined distance from the protective mask, above which the closed state is to be selectively assumed. Further alternatively or in addition, the predefined threshold may comprise a maximal density of other users in the vicinity of the protective mask, above which the closed state is to be selectively assumed.

The at least one information signal (e.g., received in the step 302 and/or obtained in the step 402) may comprise an image signal. The assessing 304 may comprise recognizing one or more persons (i.e., humans) based on the image signal.

The image signal may also be referred to as a visual signal. The information signal (e.g., received in the step 302 and/or obtained in the step 402) may comprise at least one image of the environment of the protective mask. The control equipment 100 performing the method 300 and/or the protective mask 200 performing the method 400 may comprise a camera module for capturing the image signal. Recognizing persons (e.g., humans) may comprise locating and/or identifying persons (e.g., human individuals) on the at least one image. Alternatively or in addition, assessing the image signal may comprise recognizing if a person (e.g., a human) is wearing a protective mask or not. Further alternatively or in addition, recognizing one or more persons based on the image signal may comprise recognizing a number and/or density of the one or more persons and/or a distance of the one or more persons from the protective mask.

The at least one information signal may be indicative of and/or may imply a local level of a required respiratory protection. The local level of a required respiratory protection may be a local requirement of the respiratory protection. The at least one information signal may be indicative of whether or not the respiratory protection (i.e., the closed state of the protective mask) is required. The control signal may control the actuator to assume the open state whenever the respirator protection is not required. Alternatively or in addition, the control signal may control the actuator to assume the closed state whenever the respirator protection is required.

Assuming selectively the closed state may comprise transitioning from the open state to the closed state, e.g., in case the level of a required respiratory protection changes from no requirement to wear a protective mask to wearing a protective mask. Alternatively or in addition, assuming selectively the closed state may comprise maintaining the closed state, e.g., in case a requirement of wearing a protective mask remains unchanged.

Assuming selectively the open state may comprise transitioning from the closed state to the open state, e.g., in case the level of a required respiratory protection changes from a requirement to wear a protective mask to no requirement to wear a protective mask. Alternatively or in addition, assuming selectively the open state may comprise maintaining the open state, e.g., in case no requirement of wearing a protective mask remains unchanged.

The local level of a required respiratory protection may be indicative of whether or not the respiratory protection (i.e., the closed state) is required. For example, the local level of a required respiratory protection may comprise at least one of a requirement to wear a protective mask (e.g., a community mask and/or a surgical mask) or no requirement as to wearing a protective mask. Alternatively or in addition, local level of a required respiratory protection may comprise a requirement to wear a protective mask of a certified and/or medical protection level, e.g. FFP2 and/or FFP3.

The local level of a required respiratory protection may be a target state of the protective mask. The target state of the protective mask corresponding to a requirement to wear a community mask and/or a surgical mask may control (e.g., trigger) the closed state. Alternatively or in addition, a target state of the protective mask corresponding to no requirement as to wearing a protective mask may control (e.g., trigger) the open state.

The protective mask may be configured to assume a plurality of different levels of respiratory protection in the closed state. The control signal sent 306 to and/or received 406 at the actuator of the protective mask may trigger the actuator to assume one of the levels of the respiratory protection depending on the at least one information signal.

For example, the protective mask may be configured to function selectively as a community mask and a medical face mask in the closed state. Alternatively or in addition, the protective mask may operate in the closed state as a filtering facepiece respirator configured to selectively filter droplets and/or aerosols depending on the at least one information signal. Alternatively or in addition, the protective mask may operate in the closed state as a particulate-filtering facepiece respirator configured to selectively filter a first fraction of particles in the air (e.g., at least 50% of the particles) and to filter a second fraction, which is greater than the first fraction, of particles in the air (e.g., 95% of the particles) depending on the at least one information signal.

The at least one information signal may comprise one or more radio signals, optionally received in a downlink from a radio access network (RAN) or a radio base station or in a sidelink from one or more radio devices.

The radio signals may comprise a dedicated signal or a broadcast signal.

The portable radio devices may comprise user equipments (UEs) according to 3GPP and/or mobile stations according to the Wi-Fi Alliance.

The at least one information signal may comprise and/or be indicative of an identifier (e.g., a cell identifier, CID, or a Service Set Identifier, SSID) of the radio base station. The identifier of the radio base station may be indicative of a terrestrial environment or objective environment of the protective mask. Alternatively or in addition, the at least one information signal may comprise an identifier of a discovery signal from each of the one or more UEs. The identifier of the one or more UEs may be indicative of a crowded environment or relative environment, e.g., a person and/or UE being comprised in the whitelist.

The RAN may comprise a telecommunications network or a cellular network, e.g. according to standard specified by the Third Generation Partnership Project (3GPP) such as 3GPP LTE or 3GPP NR, and/or a local area network, e.g. based on the IEEE 802.11 family of standards.

The at least one information signal indicative of an environment of the protective mask may comprise one or more radio signals of a radio-navigation satellite service (RNSS) or a global navigation satellite system (GNNS).

For example, the at least one information signal may comprise radio signals of at least one of the global positioning system (GPS), the GLObal'naya NAvigatsionnaya Sputnikovaya Sistema (GLONASS), the BeiDou Navigation Satellite System (BeiDou), and the Galileo GNNS.

The at least one information signal may comprise one or more radio signals for a radio-frequency identification (RFID).

The at least one information signal may be a radio signal for driving modulated backscattering, e.g., a source signal for driving a passive device (e.g., a RFID transponder) for transmitting information by load modulation at its backscattering antenna, e.g., by alternating between different impedances coupled to the backscattering antenna. For example, the radio signal for driving modulated backscattering may be indicative of the environment of the protective mask, optionally indicative of an entrance of an area (e.g., a checkout area or an exit area of a shop) requiring the respiratory protection (i.e., the closed state).

The RFID may comprise a near-field communication (NFC).

The at least one information signal may comprise one or more radio signals of a wireless local area network (WLAN).

Alternatively or in addition, the at least one information signal may comprise a radio signal according to a wireless network protocol, e.g., a Wi-Fi signal according to the Wi-Fi Alliance and/or based on the IEEE 802.11 family of standards according to the Institute of Electrical and Electronics Engineers (IEEE). For example, a Wi-Fi signal of a facility (e.g., a shop and/or a community facility) may be indicative of the environment of the protective mask, optionally indicative of the local level of a required respiratory protection (e.g., the requirement for respiratory protection).

Alternatively or in addition, the at least one information signal may comprise a beacon frame of the wireless network protocol. The beacon frame may be indicative of the environment of the protective mask, optionally indicative of the local level of a required respiratory protection.

The at least one information signal may comprise one or more radio signals for a device-to-device (D2D) communication.

The D2D communication may use a radio communication protocol for a personal area network (PAN), e.g., Bluetooth according to the Bluetooth Special Interest Group (SIG).

The one or more radio signals for the D2D communication may be exchanged between radio devices, optionally wherein one of the radio devices (e.g., the control equipment) performs the method 300. The radio signals may use a connectionless state or connected state between the radio devices. For example, the one or more radio signals may use a radio protocol for connectionless services, e.g. for location-relevant navigation of low-energy Bluetooth connections and/or Bluetooth 5 according to the SIG.

The received at least one information signal may comprise two or more received information signals. For example, the received at least one information signal may comprise Bluetooth signals from a plurality of UEs under different ownerships. Alternatively or in addition, the received at least one information signal may comprise a GPS signal and one or more Bluetooth signals.

The GPS signal may be indicative of an unbuilt plot, e.g., without a (e.g., positive) local requirement of wearing a protective mask. The one or more Bluetooth signals may be indicative of a number and/or a density of persons (e.g., other human users) in the vicinity of the user of the protective mask 200. The number and/or the density of persons being greater than a predefined threshold may correspond to a requirement of wearing a protective mask (i.e., the closed state).

Alternatively or in addition, the one or more radio signals received in a sidelink, the radio signals for D2D communications, or the radio signal for RFID may comprise a signal from a portable radio device in the vicinity of the user and/or the control equipment performing the method 300. For example, the portable radio device may comprise a UE under the ownership of a user different from the user of the protective mask 200. The UE may comprise at least one of a smartphone, a smartwatch, a tablet computer, and a wearable device.

The method 300 may further comprise a step of sending a further control message to a locking mechanism of a premise (e.g., a facility) in the environment responsive to the sending of the control message controlling the actuator to assume the closed state. The premise in the environment may be associated with the (e.g., positive) local requirement of the respiratory protection. The further control message may be indicative of the closed state of the protective mask and/or may comprises a request for unlocking the locking mechanism.

The method 300 may further comprise or initiate a step of outputting an alert indicative of a wearing time of the protective mask, if the wearing time is greater than a predefined threshold. The wearing time may be a collective time of assuming the closed state. By the alert, the user may be reminded to clean the protective mask and/or to change an exchangeable screen of the protective mask. Alternatively or in addition, the protective mask may comprise multiple layers (e.g., exchangeable screens or filtering sections), and the alert may trigger a change of the layer in use. The change of the layer in use may be performed by the respective actuator or respective actuators. Alternatively or in addition, the user may manually change the layer.

The method 300 may further comprise or initiate a step of receiving a command signal at a user interface, the command signal being indicative of either the open state or the closed state. The method 300 may further comprise or initiate a step of sending the control signal to the actuator of the protective mask for assuming selectively the closed state and the open state according to the command signal. For example, the command signal may overrule the at least one information signal for a predetermined time period. Alternatively or in addition the command signal may inactivate the actuator. By inactivating the actuator, the user may manually change between the open state and the closed state of the protective mask.

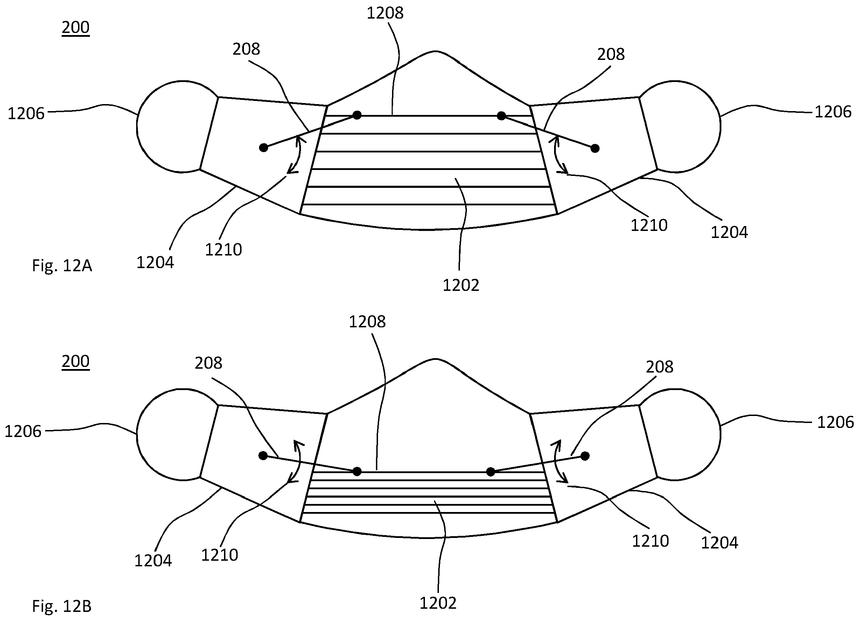

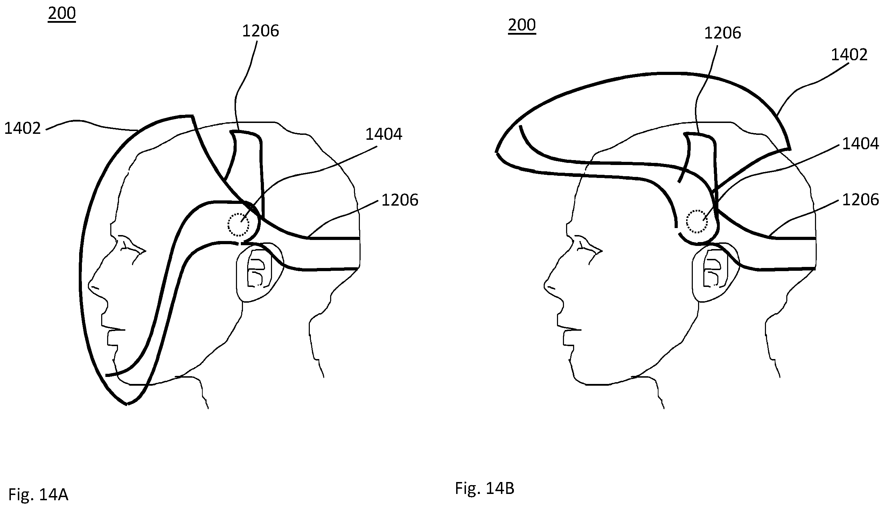

In a first embodiment of the protective mask, the protective mask may cover the mouth and/or the nose of a human user wearing the protective mask in the closed state. The protective mask may expose the mouth and/or the nose of the human user wearing the protective mask in the open state, e.g., as depicted in the embodiments of Figs. 12A, 12B and 14A, 14B. Alternatively or in addition, the filtering section, e.g., the fabric, may be shifted aside of the mouth and/or the nose of the human user in the open state. The filtering section may, in the open state, not cover the nose and/or mouth. For example, the filtering section may be folded in pleats in the open state. The pleats of the filtering section may be stretched in the closed state.

The protective mask may comprise at least one arm (e.g., a lever, preferably two arms) for assuming selectively the closed state and the open state. The at least one arm may, e.g., have one first end at a fixed position of a side section of the protective mask. A second end of the arm may be attached to a boundary of the fabric of the central section. For example, assuming selectively the closed state and the open state may comprise moving a variable upper boundary of the fabric upwards (e.g., to cover mouth and nose successively) and/or downwards (e.g., to uncover nose and mouth successively). A lower boundary of the fabric may be fixed relative to the protective mask, e.g., relative to a frame of the protective mask and/or a wearing position. For example, the lower boundary may be located at or below a user's chin.

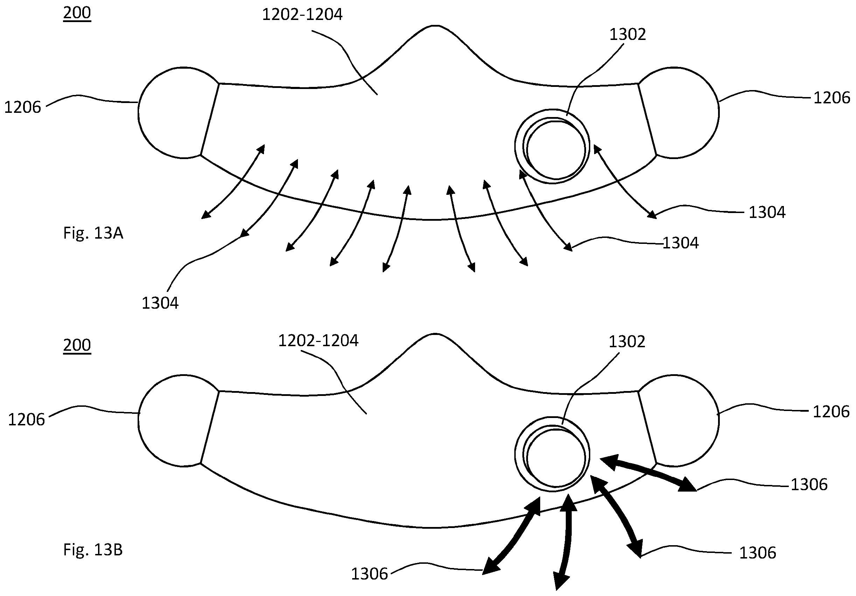

In a second embodiment of the protective mask, which may be combined with the first embodiment, the protective mask may comprise a valve, e.g., an electromagnetic valve. The valve of the protective mask may be closed in the closed state of the protective mask. The valve of the protective mask may be open in the open state of the protective mask, e.g., as depicted in the embodiment of Figs. 13A and 13B. The open valve may allow the air inhaled and/or exhaled through the mouth or the nose to bypass the filtering section.

In a third embodiment of the protective mask, which may be combined with the first or second embodiment, the protective mask may comprise a shield that is pivotable between the open state and the closed state, e.g., pivotable about a horizontal axis. For example, the protective mask may comprise a head mount (e.g., a head strap) and the pivotable shield. The head mount may pivotably support the shield. The shield may comprise the filtering section. The shield may be (at least partially) transparent. The shield may cover the face in the closed state of the protective mask. The shield may comprise a circumferential seal (e.g., an elastic rim or foam) that contacts the face and/or seals the shield on the face. The shield may be arranged above the head, or the head mount, in the open state of the protective mask.

The step 306 of sending the control signal to the actuator may comprise radio transmitting the control signal from the control equipment 100 to the protective mask 200.

The method 300 may further comprise or initiate a step of sending a message to a storage unit. The message may be indicative of the assumed state of the protective mask. Additionally, the message may be indicative of a location of the protective mask, an instant of time when the state was assumed, and/or a time duration after assuming the state.

The step 408 of assuming selectively the closed state and the open state may comprise controlling a displacement of at least a central part of the protective mask, wherein the central part covers the mouth and nose of a user in the closed state. For example, the displacement may comprise a motion along a vertical and/or horizontal direction. Alternatively or in addition, the step 408 of assuming selectively the closed state and the open state may comprise controlling a closing and/or opening of at least one valve.

The control equipment and the protective mask may be separate devices carried by the same user. The control equipment and the protective mask may be in control signal communication (e.g., exclusively) by means of radio communication. Alternatively, the protective mask may comprise the control equipment. The control equipment and the protective mask may be in control signal communication (e.g., exclusively) by means of wired communication.

The environment of the protective mask may correspond to the environment of the control equipment. For example, the protective mask and the control equipment may be collocated.

The control equipment and/or the protective mask may be spaced apart from each of the at least one object (e.g., persons and/or radio devices) in the environment. The control equipment and/or the protective mask may receive or obtain the at last one information signal from the at least one object wirelessly.

In any aspect, the control equipment and/or the radio devices may form, or may be part of, a radio network, e.g., according to the Third Generation Partnership Project (3GPP) or according to the standard family IEEE 802.11 (Wi-Fi). The radio network may be a radio access network (RAN) comprising one or more base stations. Alternatively, or in addition, the radio network may be a vehicular, *ad hoc* and/or mesh network. The first method aspect may be performed by a user equipment (UE) configured for radio access to the radio network.

Any of the radio devices (e.g., the control equipment performing the first method aspect and/or the at least one object in the environment) may be a mobile or wireless device, e.g., a 3GPP user equipment (UE) or a Wi-Fi station (STA). The radio device may be a mobile or portable station, a device for machine-type communication (MTC), a device for narrowband Internet of Things (NB-loT) or a combination thereof. Examples for the UE and the mobile station include a mobile phone, a tablet computer and a self-driving vehicle. Examples for the portable station include a laptop computer and a television set. Examples for the MTC device or the NB-loT device include robots, sensors and/or actuators, e.g., in manufacturing, automotive communication and home automation. The MTC device or the NB-loT device may be implemented in a manufacturing plant, household appliances and consumer electronics.

Any of the radio devices may be wirelessly connected or connectable (e.g., according to a radio resource control, RRC, state or active mode) with any of the base stations. Herein, the base station may encompass any station that is configured to provide radio access to any of the radio devices. The base stations may also be referred to as transmission and reception point (TRP), radio access node or access point (AP). The base station or one of the radio devices functioning as a gateway (e.g., between the radio network and the RAN and/or the Internet) may provide a data link to a host computer providing the data. Examples for the base stations may include a 3G base station or Node B, 4G base station or eNodeB (eNB), a 5G base station or gNodeB (gNB), a Wi-Fi AP and a network controller (e.g., according to Bluetooth, ZigBee or Z-Wave).

The RAN may be implemented according to the Global System for Mobile Communications (GSM), the Universal Mobile Telecommunications System (UMTS), 3GPP Long Term Evolution (LTE) and/or 3GPP New Radio (NR).

Any aspect of the technique may be implemented on a Physical Layer (PHY), a Medium Access Control (MAC) layer, a Radio Link Control (RLC) layer and/or a Radio Resource Control (RRC) layer of a protocol stack for the radio communication.

Herein, any radio communication may use an uplink (UL), a downlink (DL) or direct communication between radio devices, e.g., device-to-device (D2D) communications or sidelink (SL) communications. For example, the at least one information signal may be received and/or obtained at the control equipment 100 and/or the protective mask 200 in the DL from a network node and/or in D2D and/or SL from other radio devices, e.g. UEs pertaining to persons (e.g., human users) other than the wearer of the protective mask.

The control equipment 100 may be a radio device. Herein, any radio device may be a mobile or portable station and/or any radio device wirelessly connectable to a base station or RAN, or to another radio device. A radio device may be a UE, a device for machine-type communication (MTC) or a device for (e.g., narrowband) Internet of Things (IoT). Two or more radio devices may be configured to wirelessly connect to each other, e.g., in an *ad hoc* radio network or via a 3GPP sidelink connection. Furthermore, any base station may be a station providing radio access, may be part of a radio access network (RAN) and/or may be a node connected to the RAN for controlling radio access. Further a base station may be an access point, for example a Wi-Fi access point.

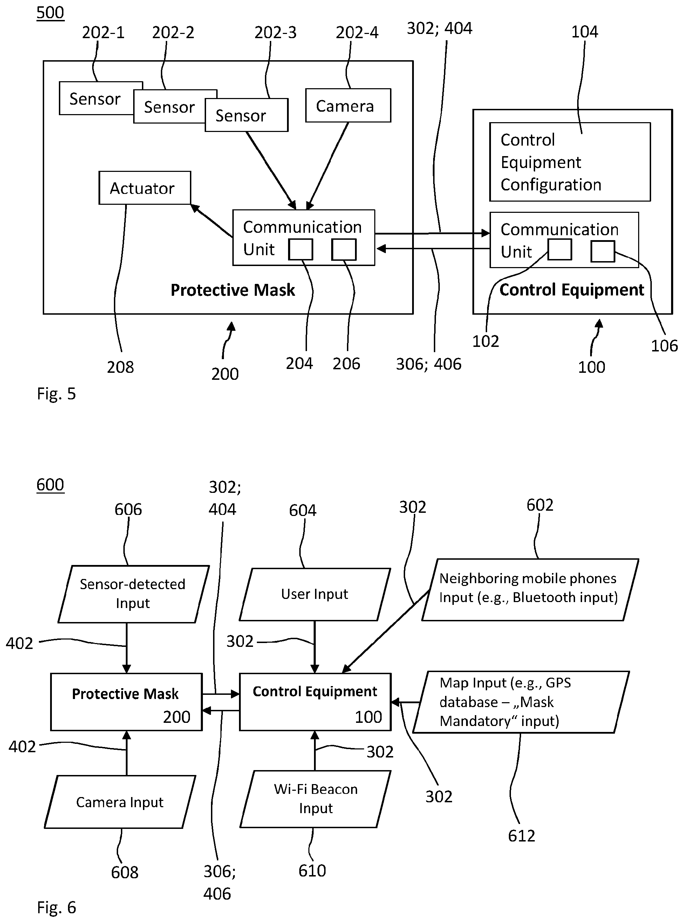

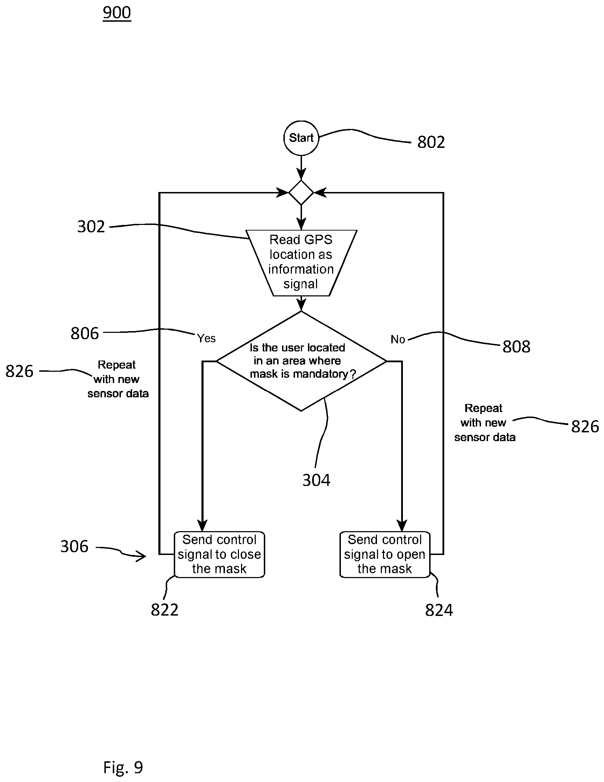

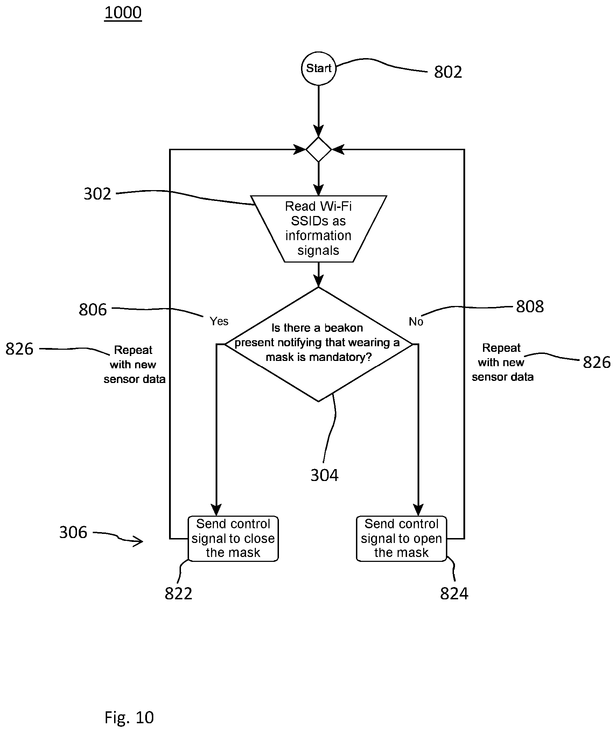

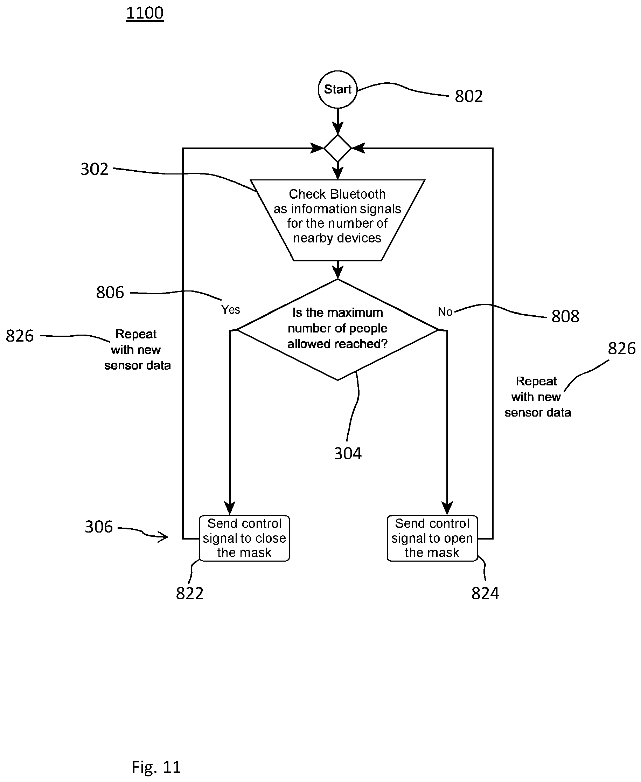

Exemplary embodiments of the control equipment 100, the protective mask 200 and the methods 300 and 400 are described in the context of Figs. 5 to 11.

Fig. 5 shows an exemplary embodiment of the control equipment 100, which may be spaced apart from the exemplary embodiment of the protective mask 200 embodying a protective mask. The control equipment 100 is configured to open and close the protective mask 200 by controlling the actuator 208 according to the environment of the wearer, e.g. based on at least one of the following signal sources or information signals.

The protective mask 200 comprises a plurality of local sensors 202-1, 202-2, and/or 202-3 as well as a local camera 202-4 located as signal sources for obtaining 402 the at least one information signal at the protective mask 200. The protective mask 200 further comprises a communication unit (e.g., comprising at least one of the units 204 and 206) for radio communication, according to the method steps 306 and 406, with the control equipment 100 and/or for radio communication with further radio devices, e.g., using Bluetooth or Wi-Fi technology.

As schematically illustrated in Fig. 5, the control equipment 100 may be spaced apart from the protective mask 200. The control equipment 100 comprises a communication unit, which includes an information signal receiving unit 102 and a control signal sending unit 106. A configuration of the control equipment 100 (briefly: control equipment configuration) in the exemplary embodiment of Fig. 5 comprises the information signal assessing unit 104 of Fig. 1.

The communication between the control equipment 100, the protective mask 200 and a local environment is exemplified by the block diagram in Fig. 6.

The protective mask 200 in the example of Fig. 6 itself is equipped with local sensors such as an infra-red camera and/or camera configured to detect other persons, e.g., based on infra-red sensor input 606 or camera input 608. The protective mask 200 in Fig. 6 may further comprise a distance sensor and/or a humidity sensor providing further sensor detected input 606.

The camera, e.g. camera 202-4 in Fig. 5, may be used for an image-based identification of one or more persons in the environment. For example, the one or more persons may be identified using image recognition. Image recognition may also detect and warn if there is at least one other person around, e.g. another person who does not wear a protective mask (e.g., as assessed based on the image signal).

Image recognition may allow to identify known persons, e.g., family members. For example the presence and/or proximity of a (e.g., predetermined) group of known persons may be excluded from the assessing 304, i.e., there is no need to impose the (e.g., positive) local requirement to wear a protective mask. The absence of a requirement as to wearing a mask in the presence and/or proximity of the group of known persons may be determined in the assessing step 304 based on a whitelist, e.g., obtained in the user input 604, as schematically illustrated in Fig. 6. The whitelist may, e.g., be stored at the control equipment configuration 104, as schematically illustrated in Fig. 5.

Central and/or network-based information systems may be involved in assessing 304 the need for respiratory protection. E.g., locations with (e.g., positive) local requirements to wear a protective mask all the time may be determined in the step 304. The control equipment 100 in the example of Fig. 6 may take a GPS database 612 (e.g., a map) and/or GPS localization (e.g., GPS signals) into account in the assessment 304.

Furthermore, e.g., as schematically illustrated in the example of Fig. 6, the at least one information signal may comprise local radio beacons. The local radio beacons may determine the (e.g., positive) local requirement for the respiratory protection (i.e., a local mask requirement). This information signal may be implemented using a local Wi-Fi signal 610, a Bluetooth signal 602, and/or an NFC signal. For example the SSID of a local Wi-Fi base station or service set may be set to a string that is indicative of the (e.g., positive) local requirement to wear a protective mask. This means that the one or more local radio systems (e.g., base stations and/or radio devices) can broadcast the (e.g., positive) local requirement, preferably without the need of the control equipment 100 to actually register or enter a connected state with a radio network (e.g., with the base station).

The technique for controlling the actuator of the protective mask may comprise a system, which comprises the control equipment 100 and the protective mask 100, e.g., according to any one of Figs. 5 and 6. The control equipment 100 may comprise an application function (briefly: "app"), which may be implemented in a portable radio device, e.g. a UE, embodied by a smartphone or a smart watch. By spacing the control equipment 100 apart from the protective mask 200, the protective mask may be lightweight. By being lightweight, the fitting and/or convenience of wearing the protective mask may be increased.

Alternatively or in addition, the control equipment 100 may be comprised in the protective mask 200 itself.

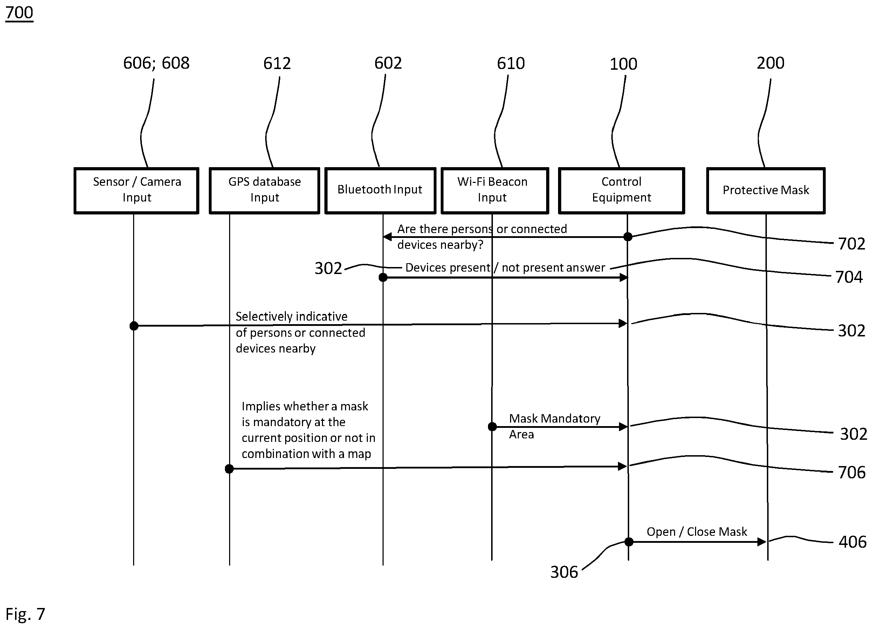

Fig. 7 shows exemplary communications of the control equipment 100 with the actuator of the protective mask 200, sensors and/or a camera 202 providing inputs 606 and/or 608, radio devices (e.g., one or more UEs of one or more other persons and/or a Wi-Fi station of an indoors location, or any further infrastructure of the local environment) and/or a radio based navigation system (e.g., comprising a map of the local environment).

The arrangement of the sensors, camera and/or any further device relative to the control equipment 100 and the protective mask 200 may be as exemplified in Figs. 5 and 6.

At reference sign 706, GPS coordinates in the at least one information signal may imply (e.g., in combination with a map indicative of a local requirement for respiratory protection) based on GPS data base input 612 if a protective mask is needed at the current location (i.e., the - e.g., positive - local requirement). For example, a GPS position and a central database comprising a list of locations, in which a protective mask is needed, may be jointly evaluated, e.g. compared. GPS coordinates may be used to identify (e.g., distinguish) pedestrian areas and/or indoor areas within buildings.

An example of the at least one information signal in the step 302, e.g., as schematically illustrated in Fig. 7, may comprise a peer-to-peer radio communication 602 (e.g., a Bluetooth input). The peer-to-peer radio communication may be received in the step 302 in response to a request by the control equipment 100, which is illustrated at reference sign 702. Alternatively or in addition, camera infrastructure providing input 608 may be used to identify one or more persons in the environment (i.e., one or more persons nearby).

Alternatively or in addition, the at least one information signal may comprise a Wi-Fi-based beacon 610, which may be used to communicate the need for wearing a mask (i.e., may be indicative of the - e.g., positive - local requirement) as a further example of the step 302 in Fig. 7. E.g., the existing Wi-Fi infrastructure may be used for implementing the at least one information signal by setting the SSID or beacon to a text message that is indicative of the (e.g., positive) local requirement (e.g., a simple text such as "wear mask!"). For example, the presence of a standardized SSID may be interpreted as order to wear a protective mask (i.e., as the - e.g., positive - local requirement). A (e.g., Wi-Fi-based) beacon provides in particular very useful functionality for crowded public places, e.g., in shopping malls and/or trains. Alternatively or in addition, the (e.g., Wi-Fi-based) beacon may be used to identifying or determine the entrance and/or exit of a premise (e.g., a shop) that is associated with the (e.g., positive) local requirement for the respiratory protection.

In the step 302, e.g., as illustrated at reference sign 702 in Fig. 7, the control equipment 100 senses for nearby radio devices (i.e., radio devices in the environment) with activated Bluetooth technology. The sensing may provide Bluetooth input 602 as an example of the at least one information signal in the step 302 from one or more radio devices. Alternatively or in addition, as illustrated at reference sign 704, the sensing may not lead to the detection of any radio device in the environment of the protective mask (e.g., no radio device with Bluetooth function activated).

Identifying one or more persons in the environment, e.g., an identifier of a peer-to peer communication (e.g., a Bluetooth ID) of the radio devices (e.g., personal devices) and/or mobile numbers based on input 602 as an example of the at least one information signal may be used to compare the at least one information signal with a whitelist of persons. The persons on the whitelist may be marked as persons of the same household. The whitelist may be defined and/or stored at the control equipment 100.

The control equipment 100 may contain at least one of the following functions.

The opening and/or closing of the protective mask 200 (e.g., a screen and/or central section of the protective mask 100) may further be manually activated, e.g., by means of a button at the control equipment 100 (e.g., a human machine interface, HMI, and/or screen of a UE such as a smartphone or smart watch) and/or by means of a button on the protective mask.

In any embodiment, the open state and the closed state of the protective mask 200 may comprise an open state and a closed state, respectively, of a screen or a central section of the protective mask 200.

The open state and the closed state of the protective mask 200 may be triggered by an assessment 304 of the control equipment 100. The assessment 304 (also: "decision algorithm") may be based on one or more rules (e.g., a set of rules) and the at least one information signal (also referred to as "data") obtained 402 from at least one of a sensor (e.g., a sensor at the protective mask 200), a camera (e.g., a camera at the protective mask 200), and one or more objects in the environment (e.g., radio devices of other persons and/or an environment infrastructure) and/or received in the step 302 to decide if the protective mask 200 is to be opened or must be closed.

An example for the method 300 comprises receiving 302 an information signal in terms of a radio beacon (e.g., a beacon frame) from a radio device (e.g., an access point) in proximity to the protective mask 200, i.e., in the environment. The radio beacon is indicative of the (e.g., positive) local requirement for the respiratory protection, e.g. a message comprising "wear mask!". Alternatively or in addition, an information signal received 302 is indicative of the user being in a zone identified, e.g. by the location, where according to a general database (e.g., comprising a map) a protective mask is always needed (i.e., the - e.g., positive -local requirement, e.g., assessed in the step 304 based on GPS position).

Further alternatively or in addition, the information signal received 302 may indicate the user being in a crowded area and/or that not all person in the environment (i.e., a local vicinity) of the user being on the whitelist. Upon receiving any one of the information signals in the step 302, and optionally assessing any of the information signals in the step 304, the control signal configured to control the actuator to assume the closed state of the protective mask 200 may be sent according to the step 306. Alternatively or in addition, the step 304 of assessing the received at least one information signals may be terminated as soon as a one of the at least one received information signal is indicative or implies the (e.g., positive) local requirement for the respiratory protection, so that the control signal for assuming the closed state is sent 306 to the actuator of the protective mask 200.

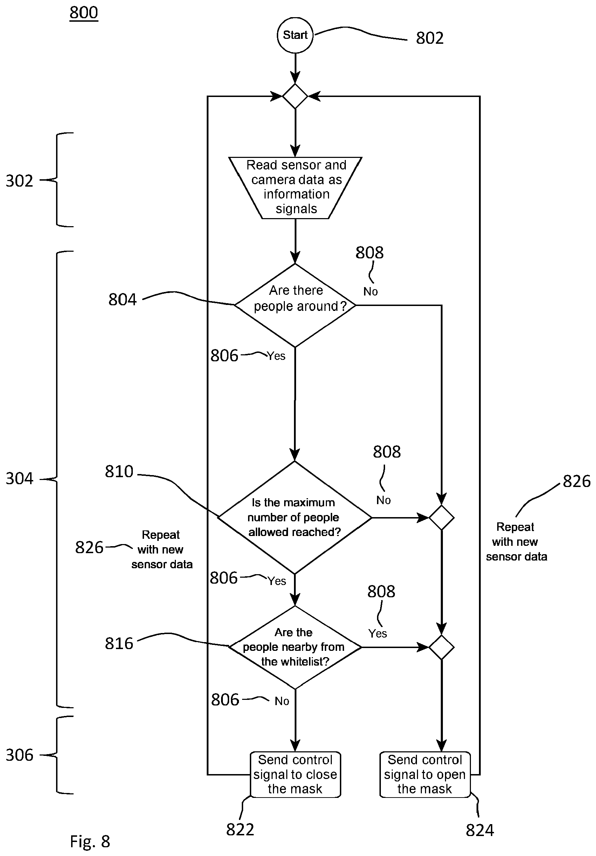

Flowcharts of embodiments of the method 300 are provided in Figs. 8 to 11. Each of the method embodiments uses one type of the at least one information signal. The method embodiments may be combined, e.g., logically combined and/or using a decision tree.

The method 300 may be initiated at reference sign 802. E.g., the user may put on the protective mask 200 and activate the control equipment 100. At reference sign 302, the at least one information signal is received.

In the method embodiments of Figs. 8, 9, 10 and 11, the at least one information signal comprises data of a sensor and/or data of a camera, location information, a Wi-Fi SSID, and a Bluetooth signal from a nearby radio device, respectively. In the step 304, the received at least one information signal is assessed.

If at reference sign 806, the assessment 304 indicates the (e.g., positive) local requirement, i.e., a need for respiratory protection, the control signal to assume the closed state is sent at reference sign 822 to the actuator of the protective mask 200.

If at reference sign 808, the assessment result indicates no local requirement (e.g., a negative local requirement), i.e., no need for respiratory protection, either no control signal is sent (e.g., if the protective mask 200 is already in the open state), or a control signal to assume the open state is sent at reference sign 824. In any of the method embodiments, or any combination of the method embodiments, the method 300 may be repeated as new information signals are received, e.g., as indicated at reference sign 826.

Further details of the assessing step 304 are described with reference to Fig. 8.

In the method embodiment of flowchart of Fig. 8, the at least one information signal received in the step 302 is indicative of one or more persons or no person in the local environment of the protective mask 200 at reference sign 804. In case of the at least one information signal indicating the presence of one or more persons, in a further substep 810 of the assessing step 304, it is verified if a number and/or density of one or more persons within a local environment exceeds a predefined threshold, above which respiratory protection is required. In a further substep 816, if the number and/or density of one or more persons exceeds the predefined threshold, the identities of the one or more persons may be compared to a whitelist. The one or more persons on the whitelist may be excluded from the counting of the number and/or the computation of the density of the one or more persons in the substep 810.

Alternatively or in addition, the substep 810 may comprise determining a sensitivity or distance (e.g., based on signal strength of the at least one information signal), optionally in crowed areas in terms of a predefined threshold, below which there exists a requirement for respiratory protection, e.g., a minimal allowed distance to another person. If the distance to one or more persons is below the minimum, the control signal 822 for assuming the closed state is sent to the actuator of the protective mask 200.

A threshold of a density of one or more persons may be defined as a maximum number of persons inside the minimal distance and/or the environment, and/or as the number of persons without a protective mask inside the minimal distance and/or the environment, e.g., based on image recognition of camera data in the at least one information signal received in the step 302.

Alternatively or in addition, the control equipment 100 may be used for warning the user, optionally without and/or prior to controlling the closed state of the protective mask, e.g., if the control equipment 100 detects (for example by receiving 302 the at least one information signal) that the environment (e.g., the location or facility) is very crowded, that one or more persons cannot maintain safe distance, and/or that one or more persons in the local environment are not wearing a protective mask.

Exemplary embodiments of the protective mask 200 are described with reference to Figs. 12A and 12B, 13A and 13B, as well as 14A and 14B, respectively. In addition to the features depicted in the respective Figs. 12A to 14B, any of the embodiments may comprise at least the control signal receiving unit 206 and the actuator unit 208, and optionally the information signal obtaining unit 202 and information signal sending unit 204, as schematically shown in Fig. 2.

According to a first embodiment, the protective mask 200 may be realized using a protective screen 1202, e.g. made of a piece of cloth and/or fabric, and an actuator 208 (also: "actuation mechanism", e.g., one more lever arms) that moves (e.g., pulls up and down) the screen 1202 as shown in Fig. 12A and 12B. The one or more lever arms 208 may have a first end rotatably 1210 and/or slidably supported at a (e.g., stationary) side portion 1204 for the protective mask 200. The one or more lever arms 208 may have a second end (e.g., at an end opposite to the first end) that is attached to a (e.g., upper) edge 1208 of the screen 1202, e.g. slidably attached to a rail 1208 bounding the screen 1202. Further boundaries of the screen may be fixed to the side portions 1204, which may guide the movement of the screen 1202 during the opening and/or closing actuated by the actuator 208.

The protective mask 200 may further comprise fixation means 1206 for fixing the protective mask 200, e.g. by means of strings and/or loops, to the user's head, e.g., at his/her ears. Alternatively or in addition, the side portions 1204 may comprise the one or more sensors (e.g., any one of the sensors 202-1, 202-2, 202-3, and/or the camera 202-4 of the embodiment of Fig. 5). Further alternatively or in addition, the side portions 1204 may comprise the control equipment 100.

Fig. 12A schematically illustrates a first embodiment of the protective mask 200 in the closed state, in which the screen 1202 covers the mouth and the nose of a user. The screen 1202 may, e.g., comprise a piece of cloth or fabric (e.g., the filtering section) being extended tautly in the closed state. Fig. 12B schematically illustrates the first embodiment of the protective mask 200 in the open state, in which the edge 1208 of the screen 1202 is pulled down from the nose and mouth and respiration is unobstructed. In the open state, the screen 1202 may, e.g. a piece of cloth and/or fabric, be folded in a lower-most position below the user's chin. The open state according to the first embodiment can allow the user to eat or drink.

The screen 1202 (e.g., the filtering section) may be detachable from the protective mask 200, e.g., from a fixed side portion 1204, for cleaning or replacing. The detachability of the screen 1202 can provide and/or increase a sustainability of the protective mask 200.

According to a second embodiment, the protective mask 200 may comprise one or more valves 1302 as shown in Figs. 13A and 13B. The closed state of the protective mask 200 shown in Fig. 13A comprises a high value of a respiratory flow resistance, as indicated by a feeble or distributed air flow through the screen 1202-1204 at reference sign 1304. The open state of the protective mask 200 shown in Fig. 13B comprises a lower value of the respiratory flow resistance than the closed state, as indicated by the strong or guided air flow through the open valve 1302 at reference sign 1306.

According to the second embodiment, the screen 1202-1204, e.g. a piece of fabric, covers the nose and mouth in both the open and closed state of the one or more valves 1203 of the protective mask 200. The screen 1202-1204 acting as the filtering section may be by-passed by the air flow 1306 through the open valve in the open state.

According to a third embodiment, the protective mask 200 may comprise a (at least partially) transparent screen 1402 pivotably and/or rotatably mounted on fixation means 1206 (e.g., a head mount), as displayed in Figs. 14A and 14B. The fixation means 1206 according to the third embodiment may for example comprise one or more straps 1206 extending along a longitude and/or (e.g., half-)width of the user's head. Anchor points 1404 for rotating and/or pivoting the screen 1402 may be located at each side of the user's head. Fig. 14A shows the closed state of the protective mask 200, wherein the screen 1402 is in a vertical position and/or extends parallel to the user's face, covering nose and mouth. Fig. 14B shows the open state of the protective mask 200, wherein the screen 1402 is arranged horizontally above the user's head. The open state according to the third embodiment, e.g., allows the user to eat and drink.

In any embodiment, the actuation of opening and/or closing the protective mask 200 may be triggered by a control equipment by means of the control signal.

Embodiments of the technique may comprise additional method steps and/or features, in particular of the protective mask 200 in view of a plurality of different protection levels.

The protective mask 200, e.g. in extension of the first embodiment of Figs. 12A and 12B may comprise multiple layers of the screen 1202, e.g., multiple layers of cloth and/or multiple layers of fabric.

A protective mask 200 with multiple layers can be adjusted to different levels of respiratory protection requirements and/or different environments. E.g., a different layer of the protective mask 200 may be used in each different environment. For example, a protective mask 200 comprising multiple layers of the screen 1202 can be used in a hospital, where different levels of respiratory protection are needed in a hallway, a sickroom, a doctor's office and/or an operating theater. Alternatively or in addition, different layers of the protective mask 200 may be used indoors as compared to an outdoor environment, e.g. comprising a respiratory protection requirement in a crowded pedestrian zone.

Alternatively or in addition, a protective mask 200 with multiple layers, e.g. of cloth, may be able to change from one layer to another layer (e.g., of cloth) if the one layer has expired, e.g., when person has been exercising (e.g., running and/or any other sport causing an increased respiratory air flow compared to a rest state) and/or if the protective mask 200 is worn for a time period longer than a recommended maximal duration of using any one of the layers of the screen 1202.

Multiple layers of the screen 1202 may enable the protective mask 200 to switch the layers for increased and/or decreased level of protection and/or for changing to a clean layer, e.g., triggered by the control equipment 100.

Switching protective mask layers may be performed without human and/or manual intervention. The control equipment 100, which may be spaced apart from the protective mask 200, may store a plurality different parameters, comprising at least one of a predetermined maximum duration of (e.g., allowed) usage of any one of the layers; a time period elapsed since first putting on and/or using the layer; a recommendation of using a given layer in a specified environment (e.g., indoors and/or outdoors); a track record of having used a given layer in a specified environment (e.g., indoors and/or outdoors); and a classification of a layer according to a level of respiratory protection requirement, e.g. level protection 1.

Alternatively or in addition, layers of the protective mask 200 may be switched manually, e.g., by pressing a button on a frame (e.g., at any one of the side portions 1204in Figs. 12A, 12B) of the protective mask 200. The user may be alerted by the control equipment 100, e.g., if switching layers is recommended due to a comparison of a time period of a layer being worn and a maximal allowed duration and/or based on a change of the local environment.

An exemplary embodiment of the protective mask 200 with multiple layers comprises one actuator 208 per layer, e.g. a pair of thin lever arms 208 as in Figs. 12A and 12B. Each actuator 208 may provide the means to assume selectively an open state or a closed state of the respective layer.

The protective mask 200 may comprise an air flow sensor, e.g. as one of the sensors 202-1, 202-2 or 202-3 in Fig. 5. The air flow sensor may be configured for breathing detection, e.g., to warn about "bad" air. Fresh air may an important criterion for a safe (e.g., in terms of health hazards related to respiration) area and/or environment.

The communication unit (e.g., the control signal sending unit 106) of the control equipment 100 may be further configured for sending a control signal to at least one radio device and/or base station in the environment of the protective mask 200 (which may also be denoted as "opposite direction" as compared to the at least one information signal received at reference signs 302 and/or 402). E.g., the control signal to the at least one radio device and/or base station in the environment may comprise a notification that the protective mask 200 is in the (or in case of different levels: the appropriate one among the) closed state(s). The at least one radio device and/or base station in the environment may be associated to a restricted entry area. The notification of the closed state of the protective mask 200 may correspond to and/or may comprise a request for entry and/or a trigger for opening a door.

The control equipment 100 may be implemented in a cloud environment. By the implementation in a cloud environment, the necessity for a separate unit and/or control equipment 100 may be removed. In case of a cloud implementation, the at least one information collected by one or more sensors located on the protective mask 200 may be wirelessly sent to a cloud-based application, e.g., via Wi-Fi or a mobile network data connection. The same and/or further wireless communication infrastructure may be used to receive the 406 the control signal at the actuator of the protective mask 200 for assuming selectively the closed state and the open state.

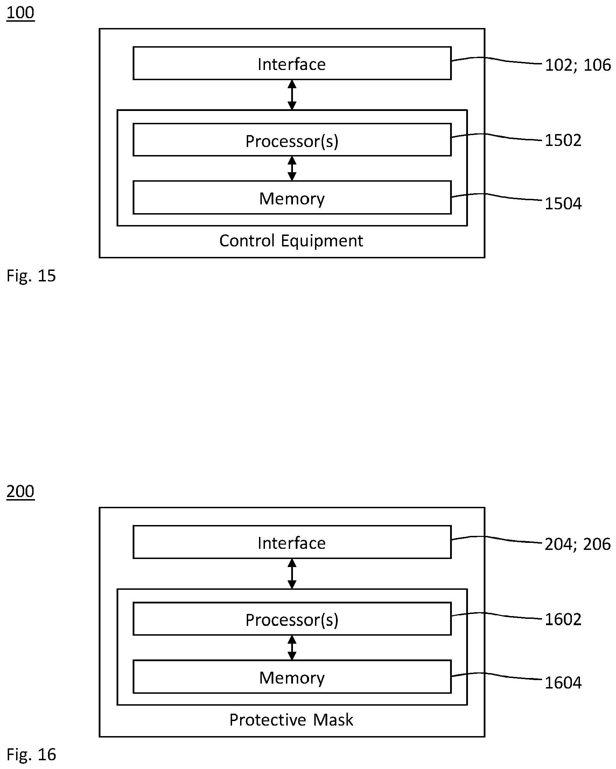

Fig. 15 shows a schematic block diagram for an embodiment of the control equipment 100. The control equipment 100 comprises one or more processors 1502 for performing the method 300 and memory 1504 coupled to the processors 1502. For example, the memory 1504 may be encoded with instructions that implement at least one of the units 102, 104 and 106.

The one or more processors 1502 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the control equipment 100, such as the memory 1504, UE or control equipment functionality. For example, the one or more processors 1502 may execute instructions stored in the memory 1504. Such functionality may include providing various features and steps discussed herein, including any of the benefits disclosed herein. The expression "the device being operative to perform an action" may denote the control equipment 100 being configured to perform the action.

As schematically illustrated in Fig. 15, the control equipment 100 may be embodied by a UE. The control equipment 100 comprises a radio interface 102 and/or 106 coupled to the processor 1502 and memory 1504 for radio communication with the protective mask 200 and, e.g., a base station and/or further UEs.

Fig. 16 shows a schematic block diagram for an embodiment of the protective mask 200. The protective mask 200 comprises one or more processors 1602 for performing the method 400 and memory 1604 coupled to the processors 1602. For example, the memory 1604 may be encoded with instructions that implement at least one of the modules 202, 204, 206 and 208.

The one or more processors 1602 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the protective mask 200, such as the memory 1604, protective mask functionality. For example, the one or more processors 1602 may execute instructions stored in the memory 1604. Such functionality may include providing various features and steps discussed herein, including any of the benefits disclosed herein. The expression "the device being operative to perform an action" may denote the protective mask 200 being configured to perform the action.

As schematically illustrated in Fig. 16, the protective mask 200 comprises a radio interface 204; 206 coupled to the processor 1602 and memory 1604 for radio communication with the control equipment 100, e.g. embodied by a UE, and optionally, e.g., a base station and/or further UEs.

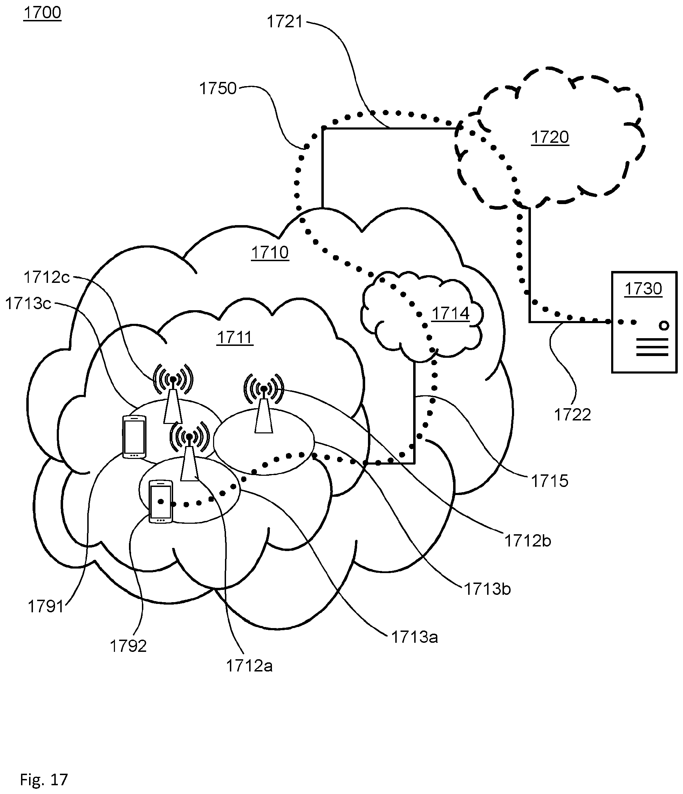

With reference to Fig. 17, in accordance with an embodiment, a communication system 1700 includes a telecommunication network 1710, such as a 3GPP-type cellular network, which comprises an access network 1711, such as a radio access network, and a core network 1714. The access network 1711 comprises a plurality of base stations 1712a, 1712b, 1712c, such as NBs, eNBs, gNBs or other types of wireless access points, each defining a corresponding coverage area 1713a, 1713b, 1713c. Each base station 1712a, 1712b, 1712c is connectable to the core network 1714 over a wired or wireless connection 1715. A first UE 1791 located in coverage area 1713c is configured to wirelessly connect to, or be paged by, the corresponding base station 1712c. A second UE 1792 in coverage area 1713a is wirelessly connectable to the corresponding base station 1712a. While a plurality of UEs 1791, 1792 are illustrated in this example, the disclosed embodiments are equally applicable to a situation where a sole UE is in the coverage area or where a sole UE is connecting to the corresponding base station 1712.

The telecommunication network 1710 is itself connected to a host computer 1730, which may be embodied in the hardware and/or software of a standalone server, a cloud-implemented server, a distributed server or as processing resources in a server farm. The host computer 1730 may be under the ownership or control of a service provider, or may be operated by the service provider or on behalf of the service provider. The connections 1721, 1722 between the telecommunication network 1710 and the host computer 1730 may extend directly from the core network 1714 to the host computer 1730 or may go via an optional intermediate network 1720. The intermediate network 1720 may be one of, or a combination of more than one of, a public, private or hosted network; the intermediate network 1720, if any, may be a backbone network or the Internet; in particular, the intermediate network 1720 may comprise two or more sub-networks (not shown).

The communication system 1700 of Fig. 17 as a whole enables connectivity between one of the connected UEs 1791, 1792 and the host computer 1730. The connectivity may be described as an over-the-top (OTT) connection 1750. The host computer 1730 and the connected UEs 1791, 1792 are configured to communicate data and/or signaling via the OTT connection 1750, using the access network 1711, the core network 1714, any intermediate network 1720 and possible further infrastructure (not shown) as intermediaries. The OTT connection 1750 may be transparent in the sense that the participating communication devices through which the OTT connection 1750 passes are unaware of routing of uplink and downlink communications. For example, a base station 1712 may not or need not be informed about the past routing of an incoming downlink communication with data originating from a host computer 1730 to be forwarded (e.g., handed over) to a connected UE 1791. Similarly, the base station 1712 need not be aware of the future routing of an outgoing uplink communication originating from the UE 1791 towards the host computer 1730.

By virtue of the method 300 and 400 being performed by any one of the UEs 1791 or 1792 and/or any one of the base stations 1712, the performance of the OTT connection 1750 can be improved, e.g., in terms of increased throughput and/or reduced latency.

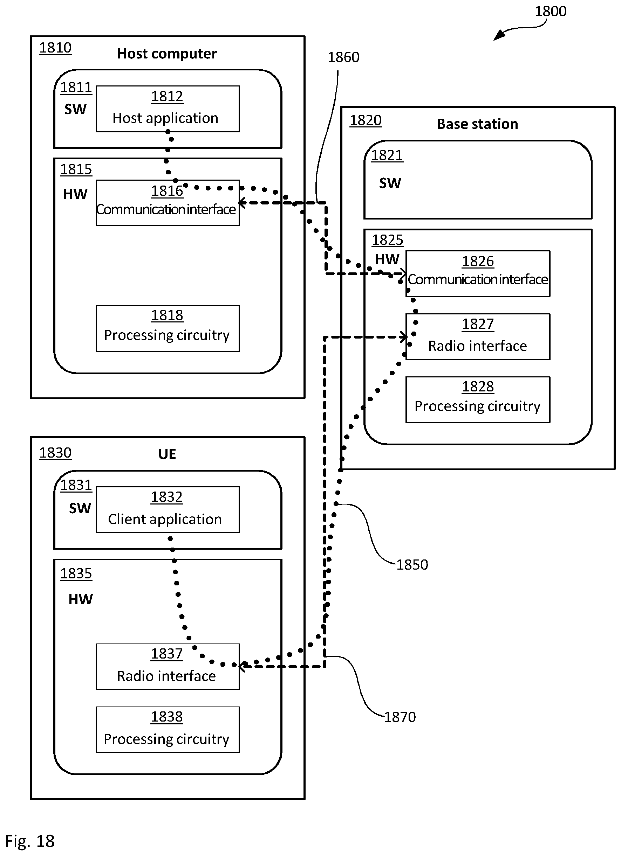

Example implementations, in accordance with an embodiment, of the UE, base station and host computer discussed in the preceding paragraphs will now be described with reference to Fig. 18. In a communication system 1800, a host computer 1810 comprises hardware 1815 including a communication interface 1816 configured to set up and maintain a wired or wireless connection with an interface of a different communication device of the communication system 1800. The host computer 1810 further comprises processing circuitry 1818, which may have storage and/or processing capabilities. In particular, the processing circuitry 1818 may comprise one or more programmable processors, application-specific integrated circuits, field programmable gate arrays or combinations of these (not shown) adapted to execute instructions. The host computer 1810 further comprises software 1811, which is stored in or accessible by the host computer 1810 and executable by the processing circuitry 1818. The software 1811 includes a host application 1812. The host application 1812 may be operable to provide a service to a remote user, such as a UE 1830 connecting via an OTT connection 1850 terminating at the UE 1830 and the host computer 1810. In providing the service to the remote user, the host application 1812 may provide user data, which is transmitted using the OTT connection 1850. The user data may depend on the location (e.g., in relation to a requirement of respiratory protection) of the UE 1830. The user data may comprise auxiliary information or precision advertisements (also: ads) delivered to the UE 1830. The location may be reported by the UE 1830 to the host computer, e.g., using the OTT connection 1850, and/or by the base station 1820, e.g., using a connection 1860.

The communication system 1800 further includes a base station 1820 provided in a telecommunication system and comprising hardware 1825 enabling it to communicate with the host computer 1810 and with the UE 1830. The hardware 1825 may include a communication interface 1826 for setting up and maintaining a wired or wireless connection with an interface of a different communication device of the communication system 1800, as well as a radio interface 1827 for setting up and maintaining at least a wireless connection 1870 with a UE 1830 located in a coverage area (not shown in Fig. 18) served by the base station 1820. The communication interface 1826 may be configured to facilitate a connection 1860 to the host computer 1810. The connection 1860 may be direct or it may pass through a core network (not shown in Fig. 18) of the telecommunication system and/or through one or more intermediate networks outside the telecommunication system. In the embodiment shown, the hardware 1825 of the base station 1820 further includes processing circuitry 1828, which may comprise one or more programmable processors, application-specific integrated circuits, field programmable gate arrays or combinations of these (not shown) adapted to execute instructions. The base station 1820 further has software 1821 stored internally or accessible via an external connection.

The communication system 1800 further includes the UE 1830 already referred to. Its hardware 1835 may include a radio interface 1837 configured to set up and maintain a wireless connection 1870 with a base station serving a coverage area in which the UE 1830 is currently located. The hardware 1835 of the UE 1830 further includes processing circuitry 1838, which may comprise one or more programmable processors, application-specific integrated circuits, field programmable gate arrays or combinations of these (not shown) adapted to execute instructions. The UE 1830 further comprises software 1831, which is stored in or accessible by the UE 1830 and executable by the processing circuitry 1838. The software 1831 includes a client application 1832. The client application 1832 may be operable to provide a service to a human or non-human user via the UE 1830, with the support of the host computer 1810. In the host computer 1810, an executing host application 1812 may communicate with the executing client application 1832 via the OTT connection 1850 terminating at the UE 1830 and the host computer 1810. In providing the service to the user, the client application 1832 may receive request data from the host application 1812 and provide user data in response to the request data. The OTT connection 1850 may transfer both the request data and the user data. The client application 1832 may interact with the user to generate the user data that it provides.

It is noted that the host computer 1810, base station 1820 and UE 1830 illustrated in Fig. 18 may be identical to the host computer 1730, one of the base stations 1712a, 1712b, 1712c and one of the UEs 1791, 1792 of Fig. 17, respectively. This is to say, the inner workings of these entities may be as shown in Fig. 18 and independently, the surrounding network topology may be that of Fig. 17.

In Fig. 18, the OTT connection 1850 has been drawn abstractly to illustrate the communication between the host computer 1810 and the use equipment 1830 via the base station 1820, without explicit reference to any intermediary devices and the precise routing of messages via these devices. Network infrastructure may determine the routing, which it may be configured to hide from the UE 1830 or from the service provider operating the host computer 1810, or both. While the OTT connection 1850 is active, the network infrastructure may further take decisions by which it dynamically changes the routing (e.g., on the basis of load balancing consideration or reconfiguration of the network).

The wireless connection 1870 between the UE 1830 and the base station 1820 is in accordance with the teachings of the embodiments described throughout this disclosure. One or more of the various embodiments improve the performance of OTT services provided to the UE 1830 using the OTT connection 1850, in which the wireless connection 1870 forms the last segment. More precisely, the teachings of these embodiments may reduce the latency and improve the data rate and thereby provide benefits such as better responsiveness.

A measurement procedure may be provided for the purpose of monitoring data rate, latency and other factors on which the one or more embodiments improve. There may further be an optional network functionality for reconfiguring the OTT connection 1850 between the host computer 1810 and UE 1830, in response to variations in the measurement results. The measurement procedure and/or the network functionality for reconfiguring the OTT connection 1850 may be implemented in the software 1811 of the host computer 1810 or in the software 1831 of the UE 1830, or both. In embodiments, sensors (not shown) may be deployed in or in association with communication devices through which the OTT connection 1850 passes; the sensors may participate in the measurement procedure by supplying values of the monitored quantities exemplified above, or supplying values of other physical quantities from which software 1811, 1831 may compute or estimate the monitored quantities. The reconfiguring of the OTT connection 1850 may include message format, retransmission settings, preferred routing etc.; the reconfiguring need not affect the base station 1820, and it may be unknown or imperceptible to the base station 1820. Such procedures and functionalities may be known and practiced in the art. In certain embodiments, measurements may involve proprietary UE signaling facilitating the host computer's 1810 measurements of throughput, propagation times, latency and the like. The measurements may be implemented in that the software 1811, 1831 causes messages to be transmitted, in particular empty or "dummy" messages, using the OTT connection 1850 while it monitors propagation times, errors etc.

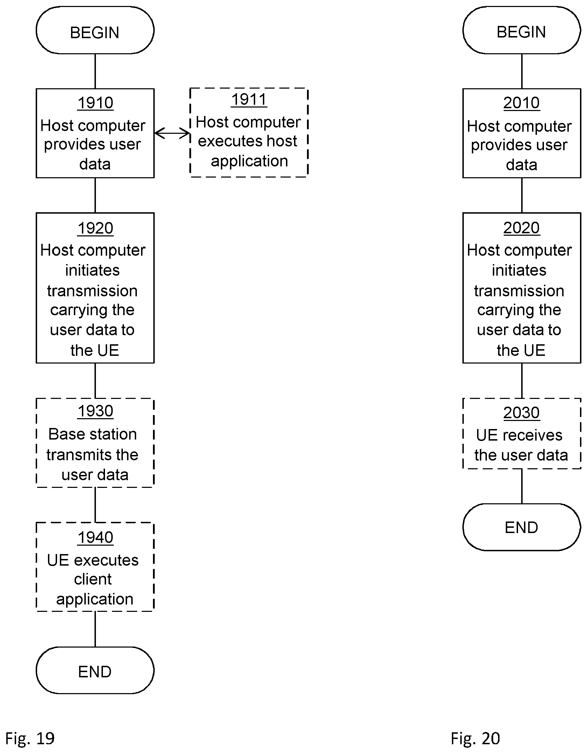

Fig. 19 is a flowchart illustrating a method implemented in a communication system, in accordance with one embodiment. The communication system includes a host computer, a base station and a UE which may be those described with reference to Fig. 17 and 18. For simplicity of the present disclosure, only drawing references to Fig. 19 will be included in this section. In a first step 1910 of the method, the host computer provides user data. In an optional substep 1911 of the first step 1910, the host computer provides the user data by executing a host application. In a second step 1920, the host computer initiates a transmission carrying the user data to the UE. In an optional third step 1930, the base station transmits to the UE the user data which was carried in the transmission that the host computer initiated, in accordance with the teachings of the embodiments described throughout this disclosure. In an optional fourth step 1940, the UE executes a client application associated with the host application executed by the host computer.

Fig. 20 is a flowchart illustrating a method implemented in a communication system, in accordance with one embodiment. The communication system includes a host computer, a base station and a UE which may be those described with reference to Figs. 17 and 18. For simplicity of the present disclosure, only drawing references to Fig. 20 will be included in this section. In a first step 2010 of the method, the host computer provides user data. In an optional substep (not shown) the host computer provides the user data by executing a host application. In a second step 2020, the host computer initiates a transmission carrying the user data to the UE. The transmission may pass via the base station, in accordance with the teachings of the embodiments described throughout this disclosure. In an optional third step 2030, the UE receives the user data carried in the transmission.

As has become apparent from above description, embodiments of the technique allow for controlling an actuator of a protective mask to assume selectively a closed state for respiratory protection and an open state, in which the respiratory flow resistance is reduced compared to the closed state. Preferably, the actuator of the protective mask is in control signal exchange with a control equipment performing an algorithm based on one or more information signals indicative of an environment of the protective mask. The one or more information signals may be received at the control equipment based on a radio and/or mobile technology in order to decide and/or assess on the opening and/or the closing of the protective mask.

The protective mask may comprise the actuator and/or the actuation mechanism to selectively open and close. Alternatively or in addition, the protective mask may be equipped with sensors and/or a camera. Further alternatively or in addition, the control equipment may comprise logic to selectively open and close the mask. Still further alternatively or in addition, the interaction of a communication unit in the control equipment with an environment may be based on radio and/or mobile technology to gather the information and/or data for the decision algorithm.

## Claims

1. A method (300) of controlling an actuator of a protective mask (200) configured to assume selectively a closed state for respiratory protection and an open state, wherein a respiratory flow resistance of the open state is reduced compared to a respiratory flow resistance of the closed state, the method (300) comprising or initiating the steps of:
receiving (302) at least one information signal indicative of an environment of the protective mask (200);
sending (306) a control signal to the actuator of the protective mask (200) for assuming the closed state depending on the at least one information signal; the method **characterized by**
responsive to the sending of the control message controlling the actuator to assume the closed state, sending a further control message to a locking mechanism of a premise in the environment which is associated with a local requirement of the respiratory protection, and wherein the further control message is indicative of the closed state of the protective mask (200) and/or comprises a request for unlocking the locking mechanism.

2. The method (300) of claim 1, further comprising the step of:
assessing (304) the received (302) at least one information signal in relation to the local requirement for the respiratory protection,
wherein the sent (306) control signal controls the actuator to assume selectively the open state and the closed state depending on the result of the assessing (304).

3. The method (300) of claim 2, wherein the at least one information signal is indicative of at least one of a location of the protective mask (200) and a type of location of the protective mask (200 and wherein the assessing (304) comprises determining whether or not the received (302) at least one information signal implies a positive local requirement indicative of a requirement for the respiratory protection in the environment using a map that associates at least one of the location of the protective mask (200) and the type of location of the protective mask (200) with the positive local requirement.

4. The method (300) of any one of claims 2 to 3, wherein the at least one information signal is indicative of at least one of one or more persons and one or more portable radio devices in the environment of the protective mask (200).

5. The method (300) of claim 4, wherein the assessing (304) comprises determining whether or not the received (302) at least one information signal implies the positive local requirement for the respiratory protection in the environment based on a number or density of at least one of the one or more persons and the one or more portable radio devices in the environment of the protective mask (200), optionally if the number or density of at least one of the one or more persons and the one or more portable radio devices exceeds a predefined threshold.

6. The method (300) of any one of claims 2 to 5,
wherein the at least one information signal implies a positive local requirement indicative of a requirement for the respiratory protection if the at least one information signal is indicative of the protective mask (200) being located indoors, and/or
wherein the at least one information signal does not imply a positive local requirement indicative of a requirement for the respiratory protection if the at least one information signal is indicative of the protective mask (200) being located outdoors; and/or
wherein the at least one information signal implies a negative local requirement indicative of no requirement for the respiratory protection if the at least one information signal is indicative of the protective mask (200) being located outdoors.

7. The method (300) of any one of claims 2 to 6, wherein the at least one information signal is indicative of an identifier of at least one of a premise and a radio device in the environment, and wherein the assessing (304) comprises comparing the received (302) at least one information signal with a stored list of at least one of premises and radio devices.

8. The method (300) of claim 7, wherein the stored list comprises an exclusion list of radio devices, which are excluded from the assessing (304) of the received (302) at least one information signal in relation to the local requirement for the respiratory protection, optionally wherein the exclusion list comprises identifiers of radio devices used in the household of a user of the protective mask (200); and/or
wherein the stored list comprises an exclusion list of premises, in which the sent (306) control signal controls the actuator to assume the open state, optionally wherein the exclusion list comprises an identifier of a household premise of the household of a user of the protective mask (200).

9. The method (300) of claim 7 or 8, wherein the stored list comprises a restriction list of radio devices, responsive to the identifier of which the sent (306) control signal controls the actuator to assume the closed state, optionally wherein the restriction list comprises identifiers of radio devices used by persons of an infection risk group; and/or
wherein the stored list comprises a restriction list of premises, in which the sent (306) control signal controls the actuator to assume the closed state, optionally wherein the restriction list comprises identifiers of premises used by persons of an infection risk group.

10. The method (300) of any one of claims 2 to 9, wherein the at least one information signal is indicative of a distance between the protective mask (200) and at least one portable radio device or person in the environment of the protective mask (200), and wherein the assessing (304) comprises determining whether or not the distance is less than a predefined threshold.

11. The method (300) of claim 10, wherein the sent (306) control signal controls the actuator to assume the closed state if the distance is less than the predefined threshold and/or wherein the sent (306) control signal controls the actuator to assume the open state if the distance is greater than the predefined threshold.

12. The method (300) of claim 10 or 11, wherein the received (302) at least one information signal is excluded from the assessing (304) in relation to the local requirement for the respiratory protection, if the distance indicated by the at least one information signal is greater than the predefined threshold.

13. The method (300) of any one of claims 2 to 12, wherein the received (302) at least one information signal comprises an image signal, and wherein the assessing (304) comprises recognizing one or more persons based on the image signal.

14. The method (300) of any one of claims 1 to 13, wherein the at least one information signal comprises at least one radio signal, optionally received (302) in a downlink from a radio access network, RAN, or a radio base station or in a sidelink from one or more radio devices and/or wherein the at least one information signal indicative of an environment of the protective mask (200) comprises at least one radio signal of a radio-navigation satellite service, RNSS, or a global navigation satellite system, GNNS and/or wherein the at least one information signal comprises at least one radio signal for a radio-frequency identification, RFID and/or wherein the at least one information signal comprises at least one radio signal of a wireless local area network, WLAN and/or wherein the at least one information signal comprises at least one radio signal for a device-to-device communication.

15. A method (400) performed by a protective mask (200) comprising an actuator for assuming selectively a closed state for respiratory protection and an open state, wherein a respiratory flow resistance of the open state is reduced compared to a respiratory flow resistance of the closed state, the protective mask (200) having integrated or being in signal exchange with a control equipment (100) adapted to perform the steps of a method of any of the claims 1 to 14, the method (400) comprising or initiating the steps of:
receiving (406), at the actuator of the protective mask (200), a control signal for assuming the closed state; and
assuming (408), by means of the actuator, the closed state of the protective mask (200) depending on the received (406) control signal.

16. The method (400) of claim 15, further comprising the steps of:
obtaining (402), at the protective mask (200), at least one information signal indicative of an environment of the protective mask (200); and
sending (404), from the protective mask (200) to the control equipment (100), the at least one information signal indicative of the environment of the protective mask (200), wherein the control signal is received (406) from the control equipment (100).

17. A control equipment (100) for controlling an actuator of a protective mask (200) configured to assume selectively a closed state for respiratory protection and an open state, wherein a respiratory flow resistance of the open state is reduced compared to a respiratory flow resistance of the closed state, the control equipment (100) being **characterized by** being configured to perform the steps of any one of claims 1 to 14.

18. A protective mask (200) for assuming selectively a closed state for respiratory protection and an open state by means of an actuator of the protective mask (200), wherein a respiratory flow resistance of the open state is reduced compared to a respiratory flow resistance of the closed state, the protective mask (200) having integrated or being in signal exchange with a control equipment (100) according to claim 17, the protective mask (200) being configured to:
receive, at the actuator of the protective mask (200), a control signal for assuming the closed state; and
assume, by means of the actuator, the closed state of the protective mask (200) depending on the received control signal.

## Patentansprüche

1. Verfahren (300) zur Steuerung eines Aktuators einer Schutzmaske (200), die dazu ausgelegt ist, selektiv einen geschlossenen Zustand für Atemschutz und einen offenen Zustand anzunehmen, wobei ein Atemströmungswiderstand des offenen Zustands im Vergleich zu einem Atemströmungswiderstand des geschlossenen Zustands verringert ist, wobei das Verfahren (300) die folgenden Schritte umfasst oder initiiert:
Empfangen (302) mindestens eines Informationssignals, das eine Umgebung der Schutzmaske (200) anzeigt;
Senden (306) eines Steuersignals an den Aktuator der Schutzmaske (200) zum Annehmen des geschlossenen Zustands in Abhängigkeit von dem mindestens einen Informationssignal; wobei das Verfahren durch Folgendes gekennzeichnet ist:
in Reaktion auf das Senden der Steuernachricht, die den Aktuator steuert, um den geschlossenen Zustand anzunehmen, Senden eines weiteren Steuersignals an einen Verriegelungsmechanismus eines Raums in der Umgebung, der mit einer lokalen Anforderung des Atemschutzes assoziiert ist, und wobei die weitere Steuernachricht den geschlossenen Zustand der Schutzmaske (200) anzeigt und/oder eine Anforderung zum Entriegeln des Verriegelungsmechanismus umfasst.

2. Verfahren (300) nach Anspruch 1, ferner umfassend den folgenden Schritt:
Beurteilen (304) des empfangenen (302) mindestens einen Informationssignals in Bezug auf die lokale Anforderung für den Atemschutz,
wobei das gesendete (306) Steuersignal den Aktuator steuert, um in Abhängigkeit von dem Ergebnis des Beurteilens (304) selektiv den offenen Zustand und den geschlossenen Zustand anzunehmen.

3. Verfahren (300) nach Anspruch 2, wobei das mindestens eine Informationssignal mindestens eines von einer Position der Schutzmaske (200) und einer Art der Position der Schutzmaske (200) anzeigt und wobei das Beurteilen (304) Bestimmen, ob das empfangene (302) mindestens eine Informationssignal eine positive lokale Anforderung, die eine Anforderung für den Atemschutz in der Umgebung anzeigt, impliziert oder nicht, unter Verwendung einer Karte umfasst, die mindestens eines von der Position der Schutzmaske (200) und der Art der Position der Schutzmaske (200) mit der positiven lokalen Anforderung assoziiert.

4. Verfahren (300) nach einem der Ansprüche 2 bis 3, wobei das mindestens eine Informationssignal mindestens eines von einer oder mehreren Personen und einer oder mehreren tragbaren Funkvorrichtungen in der Umgebung der Schutzmaske (200) anzeigt.

5. Verfahren (300) nach Anspruch 4, wobei das Beurteilen (304) Bestimmen, ob das empfangene (302) mindestens eine Informationssignal die positive lokale Anforderung für den Atemschutz in der Umgebung impliziert oder nicht, basierend auf einer Anzahl oder einer Dichte von mindestens einem der einen oder den mehreren Personen und der einen oder den mehreren tragbaren Funkvorrichtungen in der Umgebung der Schutzmaske (200) und optional, falls die Anzahl oder die Dichte von mindestens einem der einen oder der mehreren Personen und der einen oder der mehreren tragbaren Funkvorrichtungen einen vordefinierten Schwellenwert überschreitet, umfasst.

6. Verfahren (300) nach einem der Ansprüche 2 bis 5,
wobei das mindestens eine Informationssignal eine positive lokale Anforderung impliziert, die eine Anforderung für den Atemschutz anzeigt, falls das mindestens eine Informationssignal anzeigt, dass sich die Schutzmaske (200) in einem Innenraum befindet, und/oder
wobei das mindestens eine Informationssignal keine positive lokale Anforderung impliziert, die eine Anforderung für den Atemschutz anzeigt, falls das mindestens eine Informationssignal anzeigt, dass sich die Schutzmaske (200) im Freien befindet, und/oder
wobei das mindestens eine Informationssignal eine negative lokale Anforderung impliziert, die keine Anforderung für den Atemschutz anzeigt, falls das mindestens eine Informationssignal anzeigt, dass sich die Schutzmaske (200) im Freien befindet.

7. Verfahren (300) nach einem der Ansprüche 2 bis 6, wobei das mindestens eine Informationssignal eine Kennung mindestens eines von einem Raum und einer Funkvorrichtung in der Umgebung anzeigt und wobei das Beurteilen (304) Vergleichen des empfangenen (302) mindestens einen Informationssignals mit einer gespeicherten Liste mindestens eines von Räumen und Funkvorrichtungen umfasst.

8. Verfahren (300) nach Anspruch 7, wobei die gespeicherte Liste eine Ausschlussliste von Funkvorrichtungen umfasst, die von dem Beurteilen (304) des empfangenen (302) mindestens einen Informationssignals in Bezug auf die lokale Anforderung für den Atemschutz ausgeschlossen sind, wobei optional die Ausschlussliste Kennungen der Funkvorrichtungen umfasst, die im Haushalt eines Benutzers der Schutzmaske (200) verwendet werden; und/oder
wobei die gespeicherte Liste eine Ausschlussliste von Räumen umfasst, in denen das gesendete (306) Steuersignal den Aktuator steuert, um den offenen Zustand anzunehmen, wobei optional die Ausschlussliste eine Kennung eines Haushaltsraum des Haushalts eines Benutzers der Schutzmaske (200) umfasst.

9. Verfahren (300) nach Anspruch 7 oder 8, wobei die gespeicherte Liste eine Beschränkungsliste von Funkvorrichtungen umfasst, in Reaktion auf deren Kennung das gesendete (306) Steuersignal den Aktuator steuert, um den geschlossenen Zustand anzunehmen, wobei optional die Beschränkungsliste Kennungen von Funkvorrichtungen umfasst, die von Personen einer Infektionsrisikogruppe verwendet werden; und/oder
wobei die gespeicherte Liste eine Beschränkungsliste von Räumen umfasst, in denen das gesendete (306) Steuersignal den Aktuator steuert, um den geschlossenen Zustand anzunehmen, wobei optional die Beschränkungsliste Kennungen von Räumen umfasst, die von Personen einer Infektionsrisikogruppe verwendet werden.

10. Verfahren (300) nach einem der Ansprüche 2 bis 9, wobei das mindestens eine Informationssignal einen Abstand zwischen der Schutzmaske (200) und mindestens einer tragbaren Funkvorrichtung oder einer Person in der Umgebung der Schutzmaske (200) anzeigt und wobei das Beurteilen (304) Bestimmen umfasst, ob der Abstand kleiner als ein vordefinierter Schwellenwert ist oder nicht.

11. Verfahren (300) nach Anspruch 10, wobei das gesendete (306) Steuersignal den Aktuator steuert, um den geschlossenen Zustand anzunehmen, falls der Abstand kleiner als der vordefinierte Schwellenwert ist, und/oder wobei das gesendete (306) Steuersignal den Aktuator steuert, um den offenen Zustand anzunehmen, falls der Abstand größer als der vordefinierte Schwellenwert ist.

12. Verfahren (300) nach Anspruch 10 oder 11, wobei das empfangene (302) mindestens eine Informationssignal von dem Beurteilen (304) in Bezug auf die lokale Anforderung für den Atemschutz ausgeschlossen wird, falls der durch das mindestens eine Informationssignal angezeigte Abstand größer als der vordefinierte Schwellenwert ist.

13. Verfahren (300) nach einem der Ansprüche 2 bis 12, wobei das empfangene (302) mindestens eine Informationssignal ein Bildsignal umfasst und wobei das Beurteilen (304) Erkennen einer oder mehrerer Personen basierend auf dem Bildsignal umfasst.

14. Verfahren (300) nach einem der Ansprüche 1 bis 13, wobei das mindestens eine Informationssignal mindestens ein Funksignal umfasst, das optional auf einem Downlink von einem Funkzugangsnetzwerk, RAN, oder einer Funkbasisstation oder auf einem Sidelink von einer oder mehreren Funkvorrichtungen empfangen wird (302), und/oder wobei das mindestens eine Informationssignal, das eine Umgebung der Schutzmaske (200) anzeigt, mindestens ein Funksignal eines Funk-Navigationssatellitensystems, RNSS, oder eines globalen Navigationssatellitensystems, GNNS, umfasst und/oder wobei das mindestens eine Informationssignal mindestens ein Funksignal für eine Radiofrequenzidentifikation, RFID, umfasst und/oder wobei das mindestens eine Informationssignal mindestens ein Funksignal eines drahtlosen lokalen Netzwerks, WLAN, umfasst und/oder wobei das mindestens eine Informationssignal mindestens ein Funksignal für eine Vorrichtung-zu-Vorrichtung-Kommunikation umfasst.

15. Verfahren (400), das von einer Schutzmaske (200) durchgeführt wird, die einen Aktuator zum selektiven Annehmen eines geschlossenen Zustands für Atemschutz und eines offenen Zustands umfasst, wobei ein Atemströmungswiderstand des offenen Zustands im Vergleich zu einem Atemströmungswiderstand des geschlossenen Zustands verringert ist, wobei die Schutzmaske (200) eine Steuereinrichtung (100), die zum Ausführen der Schritte eines Verfahrens nach einem der Ansprüche 1 bis 14 ausgelegt ist, integriert aufweist oder in Signalaustausch damit steht, wobei das Verfahren (400) die folgenden Schritte umfasst oder initiiert:
Empfangen (406) eines Steuersignals zum Annehmen des geschlossenen Zustands an dem Aktuator der Schutzmaske (200); und
Annehmen (408) des geschlossenen Zustands der Schutzmaske (200) mittels des Aktuators in Abhängigkeit von dem empfangenen (406) Steuersignal.

16. Verfahren (400) nach Anspruch 15, ferner umfassend die folgenden Schritte:
Erhalten (402) mindestens eines Informationssignals, das eine Umgebung der Schutzmaske (200) anzeigt, an der Schutzmaske (200); und
Senden (404) des mindestens einen Informationssignals, das die Umgebung der Schutzmaske (200) anzeigt, von der Schutzmaske (200) an die Steuereinrichtung (100), wobei das Steuersignal von der Steuereinrichtung (100) empfangen wird (406).

17. Steuereinrichtung (100) zum Steuern eines Aktuators einer Schutzmaske (200), die dazu ausgelegt ist, selektiv einen geschlossenen Zustand für Atemschutz und einen offenen Zustand anzunehmen, wobei ein Atemströmungswiderstand des offenen Zustands im Vergleich zu einem Atemströmungswiderstand des geschlossenen Zustands verringert ist, wobei die Steuereinrichtung (100) **dadurch gekennzeichnet ist, dass** sie zum Durchführen der Schritte nach einem der Ansprüche 1 bis 14 ausgelegt ist.

18. Schutzmaske (200) zum selektiven Annehmen eines geschlossenen Zustands für Atemschutz und eines offenen Zustands mittels eines Aktuators der Schutzmaske (200), wobei ein Atemströmungswiderstand des offenen Zustands im Vergleich zu einem Atemströmungswiderstand des geschlossenen Zustands verringert ist, wobei die Schutzmaske (200) eine Steuereinrichtung (100) nach Anspruch 17 integriert aufweist oder damit in Signalaustausch steht, wobei die Schutzmaske (200) zum Folgendem ausgelegt ist:
Empfangen eines Steuersignals zum Annehmen des geschlossenen Zustands an dem Aktuator der Schutzmaske (200); und
Annehmen des geschlossenen Zustands der Schutzmaske (200) mittels des Aktuators in Abhängigkeit von dem empfangenen Steuersignal.

## Revendications

1. Procédé (300) de commande d'un actionneur d'un masque de protection (200) configuré pour prendre sélectivement un état fermé pour une protection respiratoire et un état ouvert, dans lequel une résistance de flux respiratoire de l'état ouvert est réduite par comparaison à une résistance de flux respiratoire de l'état fermé, le procédé (300) comprenant ou initiant les étapes suivantes :
la réception (302) d'au moins un signal d'informations indiquant un environnement du masque de protection (200) ;
l'envoi (306) d'un signal de commande à l'actionneur du masque de protection (200) pour prendre l'état fermé en fonction de l'au moins un signal d'informations ; le procédé étant **caractérisé par**
en réponse à l'envoi du message de commande commandant à l'actionneur de prendre l'état fermé, l'envoi d'un autre message de commande à un mécanisme de verrouillage d'un local dans l'environnement qui est associé à une exigence locale pour la protection respiratoire, et dans lequel l'autre message de commande indique l'état fermé du masque de protection (200) et/ou comprend une demande de déverrouillage du mécanisme de verrouillage.

2. Procédé (300) selon la revendication 1, comprenant en outre l'étape suivante :
l'évaluation (304) de l'au moins un signal d'informations reçu (302) par rapport à l'exigence locale pour la protection respiratoire,
dans lequel le signal de commande envoyé (306) commande à l'actionneur de prendre sélectivement l'état ouvert et l'état fermé en fonction du résultat de l'évaluation (304).

3. Procédé (300) selon la revendication 2, dans lequel l'au moins un signal d'informations indique au moins l'un d'un emplacement du masque de protection (200) et d'un type d'emplacement du masque de protection (200) et dans lequel l'évaluation (304) comprend la détermination si l'au moins un signal d'informations reçu (302) implique ou non une exigence locale positive indiquant une exigence pour la protection respiratoire dans l'environnement à l'aide d'une carte qui associe au moins l'un de l'emplacement du masque de protection (200) et du type d'emplacement du masque de protection (200) à l'exigence locale positive.

4. Procédé (300) selon l'une quelconque des revendications 2 et 3, dans lequel l'au moins un signal d'informations indique au moins l'un d'une ou plusieurs personnes et d'un ou plusieurs dispositifs radio portables dans l'environnement du masque de protection (200).

5. Procédé (300) selon la revendication 4, dans lequel l'évaluation (304) comprend la détermination si l'au moins un signal d'informations reçu (302) implique ou non l'exigence locale positive pour la protection respiratoire dans l'environnement sur la base d'un nombre ou d'une densité d'au moins l'un des une ou plusieurs personnes et des un ou plusieurs dispositifs radio portables dans l'environnement du masque de protection (200), facultativement si le nombre ou la densité d'au moins l'un des une ou plusieurs personnes et des un ou plusieurs dispositifs radio portables dépasse un seuil prédéfini.

6. Procédé (300) selon l'une quelconque des revendications 2 à 5,
dans lequel l'au moins un signal d'informations implique une exigence locale positive indiquant une exigence pour la protection respiratoire si l'au moins un signal d'informations indique que le masque de protection (200) est situé à l'intérieur, et/ou
dans lequel l'au moins un signal d'informations n'implique pas une exigence locale positive indiquant une exigence pour la protection respiratoire si l'au moins un signal d'informations indique que le masque de protection (200) est situé à l'extérieur ; et/ou
dans lequel l'au moins un signal d'informations implique une exigence locale négative indiquant aucune exigence pour la protection respiratoire si l'au moins un signal d'informations indique que le masque de protection (200) est situé à l'extérieur.

7. Procédé (300) selon l'une quelconque des revendications 2 à 6, dans lequel l'au moins un signal d'informations indique un identifiant d'au moins l'un d'un local et d'un dispositif radio dans l'environnement, et dans lequel l'évaluation (304) comprend la comparaison de l'au moins un signal d'informations reçu (302) à une liste stockée d'au moins l'un de locaux et de dispositifs radio.

8. Procédé (300) selon la revendication 7, dans lequel la liste stockée comprend une liste d'exclusion de dispositifs radio, qui sont exclus de l'évaluation (304) de l'au moins un signal d'informations reçu (302) par rapport à l'exigence locale pour la protection respiratoire, facultativement dans lequel la liste d'exclusion comprend des identifiants de dispositifs radio utilisés dans le foyer d'un utilisateur du masque de protection (200) ; et/ou
dans lequel la liste stockée comprend une liste d'exclusion de locaux, dans lesquels le signal de commande envoyé (306) commande à l'actionneur de prendre l'état ouvert, facultativement dans lequel la liste d'exclusion comprend un identifiant d'un local de foyer du foyer d'un utilisateur du masque de protection (200) .

9. Procédé (300) selon la revendication 7 ou 8, dans lequel la liste stockée comprend une liste de restriction de dispositifs radio, en réponse aux identifiants desquels le signal de commande envoyé (306) commande à l'actionneur de prendre l'état fermé, facultativement dans lequel la liste de restriction comprend des identifiants de dispositifs radio utilisés par des personnes d'un groupe à risque d'infection ; et/ou
dans lequel la liste stockée comprend une liste de restriction de locaux, dans lesquels le signal de commande envoyé (306) commande à l'actionneur de prendre l'état fermé, facultativement dans lequel la liste de restriction comprend des identifiants de locaux utilisés par des personnes d'un groupe à risque d'infection.

10. Procédé (300) selon l'une quelconque des revendications 2 à 9, dans lequel l'au moins un signal d'informations indique une distance entre le masque de protection (200) et au moins un dispositif radio portable ou une personne dans l'environnement du masque de protection (200), et dans lequel l'évaluation (304) comprend la détermination si la distance est ou non inférieure à un seuil prédéfini.

11. Procédé (300) selon la revendication 10, dans lequel le signal de commande envoyé (306) commande à l'actionneur de prendre l'état fermé si la distance est inférieure au seuil prédéfini et/ou dans lequel le signal de commande envoyé (306) commande à l'actionneur de prendre l'état ouvert si la distance est supérieure au seuil prédéfini.

12. Procédé (300) selon la revendication 10 ou 11, dans lequel l'au moins un signal d'informations reçu (302) est exclu de l'évaluation (304) par rapport à l'exigence locale pour la protection respiratoire, si la distance indiquée par l'au moins un signal d'informations est supérieure au seuil prédéfini.

13. Procédé (300) selon l'une quelconque des revendications 2 à 12, dans lequel l'au moins un signal d'informations reçu (302) comprend un signal d'image, et dans lequel l'évaluation (304) comprend la reconnaissance d'une ou plusieurs personnes sur la base du signal d'image.

14. Procédé (300) selon l'une quelconque des revendications 1 à 13, dans lequel l'au moins un signal d'informations comprend au moins un signal radio, facultativement reçu (302) dans une liaison descendante depuis un réseau d'accès radio, RAN, ou une station de base radio ou dans une liaison latérale depuis un ou plusieurs dispositifs radio et/ou dans lequel l'au moins un signal d'informations indiquant un environnement du masque de protection (200) comprend au moins un signal radio d'un système de radionavigation par satellite, RNSS, ou d'un système mondial de navigation par satellite, GNNS, et/ou dans lequel l'au moins un signal d'informations comprend au moins un signal radio pour une identification par radiofréquence, RFID, et/ou dans lequel l'au moins un signal d'informations comprend au moins un signal radio d'un réseau local sans fil, WLAN, et/ou dans lequel l'au moins un signal d'informations comprend au moins signal radio pour une communication de dispositif à dispositif.

15. Procédé (400) réalisé par un masque de protection (200) comprenant un actionneur pour prendre sélectivement un état fermé pour une protection respiratoire et un état ouvert, dans lequel une résistance de flux respiratoire de l'état ouvert est réduite par comparaison à une résistance de flux respiratoire de l'état fermé, le masque de protection (200) ayant intégré ou étant en échange de signal avec un équipement de commande (100) adapté pour réaliser les étapes d'un procédé selon l'une quelconque des revendications 1 à 14, le procédé (400) comprenant ou initiant les étapes suivantes :
la réception (406), au niveau de l'actionneur du masque de protection (200), d'un signal de commande pour prendre l'état fermé ; et
la prise (408), au moyen de l'actionneur, de l'état fermé du masque de protection (200) en fonction du signal de commande reçu (406).

16. Procédé (400) selon la revendication 15, comprenant en outre les étapes suivantes :
l'obtention (402), au niveau du masque de protection (200), d'au moins signal d'informations indiquant un environnement du masque de protection (200) ; et
l'envoi (404), du masque de protection (200) à l'équipement de commande (100), de l'au moins un signal d'informations indiquant l'environnement du masque de protection (200), dans lequel le signal de commande est reçu (406) depuis l'équipement de commande (100).

17. Equipement de commande (100) pour commander un actionneur d'un masque de protection (200) configuré pour prendre sélectivement un état fermé pour une protection respiratoire et un état ouvert, dans lequel une résistance de flux respiratoire de l'état ouvert est réduite par comparaison à une résistance de flux respiratoire de l'état fermé, l'équipement de commande (100) étant **caractérisé en ce qu'**il est configuré pour réaliser les étapes selon l'une quelconque des revendications 1 à 14.

18. Masque de protection (200) pour prendre sélectivement un état fermé pour une protection respiratoire et un état ouvert au moyen d'un actionneur du masque de protection (200), dans lequel une résistance de flux respiratoire de l'état ouvert est réduite par rapport à une résistance de flux respiratoire de l'état fermé, le masque de protection (200) ayant intégré ou étant en échange de signal avec un équipement de commande (100) selon la revendication 17, le masque de protection (200) étant configuré pour :
recevoir, au niveau de l'actionneur du masque de protection (200), un signal de commande pour prendre l'état fermé ; et
prendre, au moyen de l'actionneur, l'état fermé du masque de protection (200) en fonction du signal de commande reçu.
